(19) Europäisches Patentamt
European Patent Office
Office européen des brevets

(11) EP 4 220 233 A1

(12) EUROPEAN PATENT APPLICATION

(43) Date of publication:
02.08.2023 Bulletin 2023/31

(21) Application number: 23160648.4

(22) Date of filing: 13.12.2013

(51) International Patent Classification (IPC):
G01S 19/39 (2010.01)          G01S 19/25 (2010.01)
G01S 19/42 (2010.01)

(52) Cooperative Patent Classification (CPC):
G01S 19/42; G01S 19/258; G01S 19/396

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 14.12.2012 GB 201222655

(62) Document number(s) of the earlier application(s) in
accordance with Art. 76 EPC:
13819053.3 / 2 972 491

(71) Applicant: Huawei Technologies Co., Ltd.
Shenzhen, Guangdong 518129 (CN)

(72) Inventors:
• BLACK, Alistair
United Kingdom, EH9 1ES (GB)
• ARSLAN, Tughrul Sati
United Kingdom, EH9 2PY (GB)
• SEVAK, Zankar Upendrakumar
United Kingdom, EH4 3NP (GB)
• ALSEHLY, Firas
United Kingdom, EH14 3JB (GB)

(74) Representative: Körber, Martin Hans
Mitscherlich PartmbB
Patent- und Rechtsanwälte
Sonnenstraße 33
80331 München (DE)

Remarks:
This application was filed on 08.03.2023 as a
divisional application to the application mentioned
under INID code 62.

(54) **METHOD OF ESTIMATING THE POSITION OF A DEVICE**

(57) The invention relates to a method of estimating the position of a device, the method comprising: obtaining a satellite positioning based estimate of the position of the device, the satellite positioning based estimate being determined from satellite positioning signals received from one or more satellites of a satellite positioning system; obtaining orbital positioning data indicative of an orbital position of each of the said one or more satellites; and determining an indicator of the accuracy of the satellite positioning based estimate taking into account the said orbital positioning data. The method is particularly applicable to estimating the position of a personal electronic device.

Fig. 1

EP 4 220 233 A1

**Description**

Field of the invention

The invention relates to methods of estimating the position of a device, and data processing apparatus for estimating the position of a device.

Background to the invention

Devices provided with satellite positioning modules enabled to determine their own positions using satellite positioning signals detected from satellites of a satellite positioning system (e.g. GPS, assisted GPS, GLONASS) are widespread, but these devices are typically unable to estimate their own positions accurately using satellite positioning when they are located indoors and/or outdoors in the vicinity of tall buildings. This is because lines of sight between the device and a number of the satellites of the satellite positioning system are typically blocked by the fabric of the building(s) in which they are located (or to which they are near) over a wide azimuthal range around the device. In these cases, if it is possible to obtain a satellite positioning based estimate of the position of the device at all, the position estimate is typically subject to significant errors, and in some cases the error may be greater than the estimated position error provided by the satellite positioning module.

Accordingly, a new method of determining the likely accuracy of a satellite positioning based estimate of the position of a device would be desirable, particularly a method with improved accuracy and which does not require additional equipment beyond that which is typically available on such devices.

Summary of the invention

A first aspect of the invention provides a method of estimating the position of a device, the method comprising: obtaining a satellite positioning based estimate of the position of the device, the satellite positioning based estimate being determined from satellite positioning signals received from one or more satellites of a satellite positioning system; obtaining orbital positioning data indicative of an orbital position of each of the said one or more satellites; and determining an indicator of the accuracy of the satellite positioning based estimate taking into account the said orbital positioning data.

The accuracy indicator may be indicative of the actual accuracy of the satellite positioning based estimate (i.e. whether or to what extent the accuracy of the satellite positioning based estimate meets one or more accuracy criteria). Alternatively the accuracy indicator may be indicative of a level of confidence or probability that the accuracy of the satellite positioning based estimate meets one or more accuracy criteria. The accuracy indicator may be a binary indicator indicative of whether or not the accuracy of the satellite positioning based estimate meets one or more accuracy criteria, or whether the level of confidence or probability that the satellite positioning based estimate meets one or more accuracy criteria is greater than a threshold value. Alternatively the indicator may be a value indicative of the extent to which accuracy criteria are met.

The indicator may be (for example) a condition which has been met, or which has not been met, but more preferably the indicator may be a numerical value.

The orbital positioning data is typically indicative of an orbital position of each of the said one or more satellites around the earth. The orbital positioning data may be indicative of absolute orbital positions of the said one or more satellites, or of relative orbital positions of the said one or more satellites. The orbital positioning data may comprise azimuth and/or elevation data relating to the said one or more satellites. The accuracy indicator is typically indicative of the distribution of the orbital positions of the said one or more satellites around the device. The narrower the distribution of the orbital positions of the said one or more satellites around the device, the less accurate the satellite positioning estimate may be. Accordingly, the indicator provides at least a measure of confidence in the accuracy of the satellite positioning based estimate of the position of the device. This can be used to determine to what extent the satellite positioning based estimate can be trusted when estimating the position of the device.

The method typically further comprises estimating the position of the device using a or the satellite positioning based estimate of the position of the device to an extent determined taking into account the said indicator.

By estimating the position of the device using the satellite positioning based estimate to an extent determined taking into account the said indicator it can be ensured that, if a more accurate positioning estimate than the satellite positioning estimate is available, the more accurate position estimate can be taken into account to a greater extent than the satellite positioning based estimate. Indeed, the method may further comprise obtaining an alternative estimate of the position of the device using an alternative positioning module and estimating the position of the device using the alternative estimate of the position of the device to a greater (or lesser) extent than the satellite positioning based estimate. Using a more accurate positioning estimate to a greater extent than the satellite positioning estimate can significantly improve the accuracy of estimates of the position of the device particularly where the satellite positioning estimate may be inaccurate, such as in regions (e.g. indoor regions, built up urban areas or hilly or mountainous regions) where the line(s) of sight from the device to one or more (typically two or more, more typically three or more) satellites of the satellite positioning system are obstructed by a building or other topological structure (e.g. cliff face).

The method may further comprise determining whether the device is indoors taking into account the said orbital positioning data, and/or determining whether the device is outdoors taking into account the said orbital positioning data, and determining the said indicator taking into account whether the device is determined to be indoors and/or whether the device is determined to be outdoors.

Determining whether the device is indoors may comprise calculating a probability of whether the device is indoors taking into account the said orbital positioning data. Determining whether the device is outdoors may comprise calculating a probability of whether the device is outdoors taking into account the said orbital positioning data. Taking into account whether the device is determined to be indoors and/or whether the device is determined to be outdoors may comprise taking into account the calculated probability of whether the device is indoors and/or taking into account the calculated probability of whether the device is outdoors as appropriate.

Additionally or alternatively, the method may further comprise: determining whether the device is at a position which meets one or more proximity criteria with respect to one or more satellite positioning signal blocking features taking into account the said orbital positioning data, and determining the said indicator taking into account the said determination of whether the device is at such a position.

Determining whether the device is at a position which meets one or more proximity criteria with respect to one or more satellite positioning signal blocking features may comprise: calculating a probability as to whether the device is at a position which meets one or more proximity criteria with respect to one or more satellite positioning signal blocking features taking into account the said orbital positioning data. Taking into account the said determination of whether the device is at such a position may comprise taking into account the said calculated probability of whether the device is at such a position.

Typically, the satellite positioning based estimate(s) of the position of the device is (are) determined from satellite positioning signals received from two or more satellites of a satellite positioning system, or three or more satellites of a satellite positioning system.

The step of obtaining the orbital positioning data may comprise determining an azimuth of each of the said one or more satellites.

The method may comprise determining the said indicator of the accuracy of the satellite positioning estimate taking into account an azimuthal distribution of the said one or more (typically two or more, or three or more) satellites around the device. Taking into account the azimuthal distribution may comprise defining two or more (typically three or more) azimuth sectors (e.g. with reference to the device), each azimuth sector comprising a (different) portion of a 360° azimuth range surrounding the device, and determining (typically using the orbital positioning data) the number of azimuth sectors from which one or more satellite positioning signals were received to determine the said satellite positioning based estimate of the position of the device (i.e. the azimuth sectors in which at least one satellite is detected). The accuracy indicator may be dependent on (or be) the number of azimuth sectors in which at least one satellite is detected.

The method may further comprise determining an elevation of the said one or more (typically two or more, or three or more) satellites.

The method may further comprise determining the said indicator of the accuracy of the satellite positioning based estimate taking into account the determined elevations of the one or more satellites.

The method may comprise determining the said indicator of the accuracy of the satellite positioning based estimate taking into account an elevational distribution of the elevations of the said one or more (typically two or more, or three or more) satellites (e.g. relative to the device). Taking into account the elevational distribution may comprise defining two or more elevation sectors, each elevation sector comprising a (different) portion of a 90° elevation range (e.g. from the device), and determining (typically using the orbital positioning data) the number of elevation sectors from which one or more satellite positioning signals were received to determine the said satellite positioning based estimate of the position of the device (i.e. in which at least one satellite is detected). The accuracy indicator may be dependent on the number of elevation sectors in which at least one satellite is detected.

The step of defining the said elevation sectors may comprise estimating the position of the device using a or the satellite positioning based estimate of the position of the device, an alternative estimate of the position of the device or a combination of a or the satellite positioning based estimate and an alternative estimate of the position of the device. The elevation sectors may then be defined relative to the said estimated position of the device.

The method may thus comprise: defining a plurality of regions, each region comprising a portion of a 360° azimuthal range surrounding the device and/or a portion of a 90° elevation range defined relative to the device; using the orbital positioning data to determine the number of regions from which satellite positioning signals have been received to determine the satellite positioning based estimate(s) of the position of the device; and determining the indicator taking into account the determined number of regions.

The method may comprise defining a plurality of regions, each region comprising a (different) combination of a portion of the 360° azimuthal range surrounding the device and a portion of the 90° elevation range from the device, and determining the number of regions from which satellite positioning signals were received to determine the said satellite positioning based estimate of the position of the device (i.e. in which at least one satellite is detected). The accuracy indicator may be dependent on the number of regions in which one or more satellites were detected.

The step of defining the said regions may comprise obtaining an estimate of the position of the device (e.g. a or the satellite positioning based estimate of the position of the device, an alternative estimate of the position of the device or a combination of a or (one of) the satellite positioning based estimate(s) and an alternative estimate of the position of the device). The regions may then be defined relative to the said estimated position of the device. The alternative estimate of the position of the device may be a previously determined estimate of the position of the device.

The azimuths and/or elevations of the satellites may be measured with respect to (typically a reference position on) a reference plane defined relative to the device. The reference plane may be dependent on the device orientation. The reference plane may be defined, for example, by the device (e.g. the reference plane may be a plane occupied by the flat screen of a mobile smartphone). Alternatively, the azimuths and/or elevations of the satellites may be determined relative to a plane independent of the orientation of the device (e.g. a predetermined fixed plane such as a plane through the equator, or a plane occupied by the estimated position of the device, which may be a (or one of the) satellite positioning based estimate(s) of the position of the device or an estimate of the position of the device derived by an alternative positioning module, and/or a plane defined with respect to the earth's gravitational pull, for example a plane perpendicular to the direction of the earth's gravitational pull, the direction of the earth's gravitational pull being measured by an accelerometer of the device for example). The reference position may be an estimated position of the device (e.g. a or (one of) the satellite positioning based estimates) or the closest point on the reference plane to an estimated position of the device.

The orbital positioning data may comprise (absolute or relative) orbital positions of the said one or more satellites, the orbital positions being derived from almanac (e.g. GPS almanac data of an assisted GPS system) or ephemeris data relating to the respective one or more satellites. Accordingly, the method may comprise obtaining almanac or ephemeris data (e.g. receiving almanac or ephemeris data from a or the satellite or retrieving almanac or ephemeris data from a memory, such as a memory of the device and/or a memory of one or more servers).

In some embodiments, the method may comprise selecting an estimate of the position of the device from a plurality of estimates of the position of the device (each estimate typically being provided by a different positioning module) including the satellite positioning based estimate of the position of the device. In this case, the extent to which the satellite positioning based estimate is used may be to no extent (i.e. the satellite positioning based estimate is not taken into account at all) or to a full extent (i.e. the satellite positioning based estimate is taken as the estimate of the position of the device).

Even when the satellite positioning based estimate is not taken into account to any extent at all (or to a limited extent - for example if the satellite positioning based estimate contributes less than 20%, or less than 10% to the position estimate) to estimate the position of the device, the method may comprise storing the satellite positioning based estimate in a memory. In this case, the stored satellite positioning based estimate may be tagged to indicate that it was likely to have been of poor quality and/or that it was likely to have been unusable. The stored satellite positioning based estimate may be used retrospectively if it is subsequently discovered that the satellite positioning based estimate was likely to have been usable (e.g. sufficiently accurate) after all.

In alternative embodiments, the method may comprise determining a weighted average (e.g. a weighted mean) of a plurality of estimates of the position of the device (each of which is typically provided by a different positioning module) including the satellite positioning based estimate of the position of the device. That is, the method may comprise determining a plurality of estimates of the position of the device including (at least one of) the satellite positioning based estimate(s) of the position of the device, applying a weighting to each of the estimates of the position of the device, and estimating the position of the device by averaging (e.g. by taking a mean value of) the weighted estimated positions. In this case, the weighting applied to the satellite positioning based estimate may be determined taking into account the said indicator.

The extent to which the satellite positioning based estimate is used to estimate the position of the device may depend on accuracy indicators relating to one or more estimates of the position of the device other than the satellite positioning based estimate. For example, the said one or more other estimates of the position of the device may be provided by one or more respective other positioning modules, such as: a positioning module operable to receive and process signals from one or more wireless access points (e.g. Wi-Fi access points or Bluetooth access points) of known position to estimate the position of the device; and/or a positioning module operable to process signals from one or more sensors (e.g. compass, accelerometer) contained within the device in order to estimate a motion vector and to combine the estimated motion vector with a previously estimated position of the device to estimate an updated position of the device. The method may comprise determining one or more indicators indicative of the accuracy of the position estimates provided by the said one or more other positioning modules.

The method may further comprise displaying the estimated position of the device.

The satellite positioning signals are typically received using a satellite positioning module operable to receive satellite positioning signals and to output a satellite positioning based position estimate of the device. The satellite positioning module may also be operable to determine or receive the said orbital positioning data (e.g. the azimuths and/or elevations of the said one or more satellites). A controller (typically in communication with the satellite positioning module) may be provided to determine the said indicator of the accuracy of the satellite positioning based estimate of the position of the device (or this may be done by the satellite positioning module). The position of the device may be estimated by the controller.

The device may comprise the satellite positioning module.

The device may be a personal electronic device such as a mobile positioning device or a personal computing device (e.g. a mobile smartphone, tablet computer or laptop computer).

The device may further comprise one or more accelerometers, a processor, an orientation sensing device (e.g. compass) and/or an altitude sensing device (such as a barometer).

The orientation of the device may be determined by processing vertical acceleration data from the accelerometer. Obtaining the orientation of the device can help to define the (azimuth/elevation) reference plane.

The method may further comprise transmitting the orbital positioning data to a server. The method may further comprise the server determining the said indicator(s) and/or estimating the position of the device using the satellite positioning based estimate to an extent determined taking into account the said indicator. Alternatively, a or the processor of the device may determine the said indicator and/or estimate the position of the device using the satellite positioning based estimate to an extent determined taking into account the said indicator.

The satellite positioning system may be a Global Positioning System (GPS), assisted GPS, GLONASS or any other satellite positioning system.

The method may further comprise identifying one or more azimuth and/or elevation sectors or one or more region (see above), or one or more groups of azimuth and/or elevation sectors or one or more groups of regions, in which no satellites were detected (i.e. from which no satellite positioning signals were received in the determination of the satellite positioning based estimate of the position of the device). The method may further comprise comparing the said one or more identified sectors, regions or groups of sectors or regions with almanac (e.g. GPS almanac data of an assisted GPS satellite positioning system) or ephemeris data relating to one or more satellites of the satellite positioning system including one or more satellites from which no satellite positioning data was received to determine the said satellite positioning based estimate to determine whether any satellites were located in the said sectors or regions when the satellite positioning signals from the said one or more satellites (from which the satellite positioning based estimate was derived) were received. Responsive to a determination that one or more satellites were located in the said sectors or regions, the method may further comprise storing in memory (e.g. memory of the device or of one or more servers) an estimated position of the device (e.g. the (or one of the) satellite positioning based estimate(s) of the device or the estimated position of the device taking into account the satellite positioning based estimate to an extent determined taking into account the said indicator) where the satellite positioning signals from the said satellites located in said sectors or regions were (at least apparently) blocked. The method may further comprise storing data identifying the said sectors or regions in which the said satellites were located. The method may further comprise determining an estimated position of the one or more satellite blocking features (which may have been responsible for blocking satellite positioning signals from the satellite(s) located in the said regions/sectors) and storing the estimated position(s) of the satellite blocking feature(s) in memory (e.g. in a database which may be on the device or on a server). If the azimuths/elevations of the satellites are defined relative to a plane dependent on the orientation of the device, determining the estimated positions of the satellite positioning signal blocking features may involve determining an orientation of the device.

The method may further comprise building a database of location specific geographical descriptive data comprising estimated positions of a or the device where the satellite positioning signals from one or more satellites of the satellite positioning system are likely to be blocked and/or estimated positions of one or more satellite positioning signal blocking features. Where both the estimated positions of a or the device where the satellite positioning signals from one or more satellites of the satellite positioning system are likely to be blocked and estimated positions of one or more satellite positioning signal blocking features are provided, the estimated positions of the one or more satellite positioning signal blocking features may be associated with the positions of a or the device where the satellite positioning signals are likely to be blocked by the said satellite positioning signal blocking features. The database of location specific geographical descriptive data may further comprise data identifying the said sectors or regions from which positioning signals are likely to be blocked.

The method may further comprise storing data relating to the time and/or date at which the satellite positioning signals were received to determine the satellite positioning based estimate of the position of the device. Such data may be associated with the stored estimated positions of the device or of the one or more satellite positioning signal blocking features. This can be useful for determining whether stored data may be out of date, or to account for satellite positioning signal blocking features (such as trains or busses) which may be movable but may have predictable positions at certain times of the day.

The method may thus further comprise: obtaining further satellite positioning data relating to the orbital positions of one or more satellites of the satellite positioning system different from the said one or more satellites from which satellite positioning signals were received to determine the satellite positioning based estimate of the position of the device; and storing the further satellite positioning data (e.g. in a database of location specific geographical descriptive data) with reference to an estimated position of the device and/or time.

Typically the estimated position of the device is an estimated position of the device when the said satellite positioning signals were received from which the satellite positioning based estimate was determined.

Typically the time is the time of day and/or date at which the said satellite positioning signals were received. Alternatively the time may be the time of day and/or date at which the further satellite positioning data was stored (for example).

In order to obtain the further satellite positioning data, the method may further comprise: obtaining satellite positioning data relating to (e.g. the orbital positions of) a plurality of satellites of the satellite positioning system including the said one or more satellites from which satellite positioning signals were received and one or more further satellites of the satellite positioning system; identifying the said one or more satellites from which satellite positioning signals were received; and comparing the identified satellites with the satellite positioning data to identify one or more satellites different to the said one or more satellites from which satellite positioning signals were received to determine the satellite positioning based estimate of the position of the device.

The further satellite positioning data may relate to the azimuth(s) and/or elevation(s) of the said further satellites (e.g. defined with reference to a or the reference plane and/or with reference to an estimated position and/or orientation of the device).

The method may further comprise: storing an estimated position of the device at which the said satellite positioning signals were received and/or data identifying the said one or more satellites from which satellite positioning signals were received to determine the satellite positioning based estimate and/or data identifying one or more satellites of the satellite positioning system from which no satellite positioning signals were received to determine the satellite positioning based estimate and/or time data relating to the time of day and/or date at which the satellite positioning signals were received to determine the satellite positioning based estimate.

The method may further comprise: defining a plurality of regions, each region comprising a portion of a 360° azimuthal range surrounding the device and/or a portion of a 90° elevation range defined relative to the device; determining one or more regions from which no satellite positioning signals were received to determine the satellite positioning based estimate of the position of the device; obtaining further satellite positioning data relating to the orbital positions of one or more satellites of the satellite positioning system different from the said one or more satellites from which satellite positioning signals were received to determine the satellite positioning based estimate of the position of the device; comparing the said one or more regions with the further satellite positioning data to determine whether one or more satellites of the satellite positioning system were located in the said one or more regions when the said satellite positioning signals were received; and, responsive to a determination that one or more satellites were located in one or more of the said regions, storing the further satellite positioning data and/or an estimated position of the device at which the said satellite positioning signals were received and/or data identifying the said regions in which the said satellites from which no satellite positioning signals were received were located and/or data identifying the said one or more satellites from which satellite positioning signals were received to determine the satellite positioning based estimate and/or data identifying one or more satellites of the satellite positioning system from which no satellite positioning signals were received to determine the satellite positioning based estimate and/or time data relating to the time of day and/or date at which the satellite positioning signals were received to determine the satellite positioning based estimate. The said data is typically stored in the database of location specific geographical descriptive data.

The method may further comprise: determining an estimated position of one or more satellite blocking features (e.g. between the estimated position of the device and the said one or more regions) and/or an estimated position of at least part of the perimeter of one or more satellite positioning signal blocking features; and storing the estimated position(s) of the satellite blocking feature(s) and/or the estimated position of at least part of the perimeter of one or more satellite positioning signal blocking features. Again, the said estimated positions may be stored in the database of location specific geographical descriptive data. Alternatively, the estimated position(s) of the satellite positioning signal blocking features may not be determined and/or stored.

A plurality of position estimates may need to be performed before the estimated position of the one or more satellite positioning signal blocking features and/or an an estimated position of at least part of the perimeter of one or more satellite positioning signal blocking features can be determined to a satisfactory level of accuracy. Accordingly, the method may further comprise: determining a plurality of estimated positions of the device before determining the estimated position of one or more satellite blocking features and/or an estimated position of at least part of the perimeter of one or more satellite positioning signal blocking features.

As explained above, any of the data stored in the database of location specific geographical descriptive data may be used subsequently in the estimation of the position of a or the device.

The method may further comprise: determining a signal to noise ratio and/or a signal power of the said satellite positioning signals received from the said one or more satellites; deriving a (second) accuracy indicator from the signal to noise ratio and/or signal power; and estimating the position of the device using the satellite positioning based estimate to an extent determined taking into account the (second) accuracy indicator.

The signal to noise ratio and/or signal power are typically an average (e.g. mean, mode or median) signal to noise ratio and/or an average (e.g. mean, mode or median) signal power. A low signal to noise ratio and/or low signal power may indicate that the satellite positioning based estimate is likely to be inaccurate, and so for example may only be taken into account to a limited extent in the estimation of the position of the device.

The device may determine the second accuracy indicator, or a or the server may determine the second accuracy indicator. The signal to noise ratio and/or signal power may be determined by the device or by a or the server.

The method may further comprise obtaining altitude data indicative of an altitude of the device, deriving a (third) accuracy indicator from the altitude data and estimating the position of the device using the satellite positioning based estimate to an extent determined taking into account the (third) indicator.

The altitude data may be absolute altitude data (e.g. provided by processing altitude sensing data provided by an altitude sensor, such as a barometer, of the device) or relative altitude data (e.g. the altitude of the device relative to a local ground level, in which case the altitude of a local ground level may be provided by a database of location specific geographical descriptive data, the absolute altitude of the device may be provided by an altitude sensor, such as a barometer, of the device, and the relative altitude data may be determined by subtracting the altitude of the local ground level form the absolute altitude).

Alternatively, the said altitude data may be obtained from an estimated position of the device (which may contain the said altitude data), a database or provided by some other source.

The altitude data (and thus the third indicator) may provide an indication that the device is on an upper floor of a high-rise building and that, accordingly, the device is indoors. If the device is indoors, the likelihood of the satellite positioning based estimate being inaccurate increases. Accordingly, by taking into account the third indicator, more emphasis may be put on a position estimate obtained by an alternative positioning module if the third indicator indicates that the device is likely to be indoors.

The device may determine the third accuracy indicator, or a or the server may determine the third accuracy indicator. In the latter case, the altitude data may be transmitted to the server.

The method may further comprise: obtaining a first estimated position of the device; determining whether the first estimated position of the device meets one or more proximity criteria with respect to one or more satellite positioning signal blocking features by comparing the first estimated position of the device to location specific geographical descriptive data indicative of the positions of the said one or more satellite positioning signal blocking features; deriving a (fourth) accuracy indicator responsive to the determination of whether the first estimated position of the device meets the said one or more proximity criteria; and estimating the position of the device using the satellite positioning based estimate to an extent determined taking into account the (fourth) indicator.

It will be understood that the one or more satellite positioning signal blocking features are typically (e.g. fixed, but in some cases movable) structural features which are capable of blocking lines of sight between satellites of a satellite positioning system and a satellite positioning module of a device (e.g. when the device is adjacent to or inside the said structural feature). For example, the satellite positioning signal blocking features may be (e.g. tall) buildings or other topological features (e.g. cliff faces) which may block one or more lines of sight from the device to one or more satellites of the satellite positioning system.

The location specific geographical descriptive data is typically retrieved from a (or the) database of location specific geographical descriptive data. In one embodiment, the method may comprise retrieving location specific geographical descriptive data relating to a location area comprising an estimated position of the device (e.g. a or (one of) the satellite positioning based estimates of the position of the device or an alternative estimate of the position of the device).

The location specific geographical descriptive data (and thus the database) may comprise (e.g. geophysical) mapping information, urban area mapping information, internal layout information of one or more buildings (e.g. including the positions of windows and opaque walls), and/or one or more paths defining a range of possible positions of the device along a respective route within and/or adjacent to a building. The location specific geographical descriptive data (and thus the database) also typically comprise estimated positions of a or the device where the satellite positioning signals from one or more satellites of the satellite positioning system are likely to be blocked and/or estimated positions of one or more satellite positioning signal blocking features and/or data identifying the said azimuth and/or elevation sectors or regions from which positioning signals are likely to be blocked (see above).

The said proximity criteria may include: whether the device is within a satellite positioning signal blocking feature; whether the device is positioned within a predetermined distance of a satellite positioning signal blocking feature; whether the device is positioned within a predetermined distance of an estimated position of a or the device where the satellite positioning signals from one or more satellites of the satellite positioning system are likely to be blocked; and/or whether the device is approaching a satellite positioning signal blocking feature or an estimated position of a or the device where the satellite positioning signals from one or more satellites of the satellite positioning system are likely to be blocked.

The device may determine the fourth accuracy indicator, or a or the server may determine the fourth accuracy indicator. The device may estimate the first position of the device or the server may estimate the first position of the device. The first position of the device may be a or the satellite positioning based estimate of the position of the device, or the first position of the device may be estimated by any other available method. The position of the device estimated using the satellite positioning based estimate to an extent determined taking into account the fourth indicator may be estimated by the device or by a or the server.

It will be understood that the first position of the device is typically estimated before the position of the device is estimated using the satellite positioning based estimate to an extent determined taking into account the fourth indicator.

The method may further comprise: obtaining a first satellite positioning based estimate of the position of the device, the first satellite positioning based estimate being determined from first satellite positioning signals received from one or more satellites of a satellite positioning system; obtaining a second satellite positioning based estimate of the position of the device, the second satellite positioning based estimate being determined from second satellite positioning signals received from one or more satellites of a satellite positioning system; comparing the first position to the second position to determine a (fifth) indicator of the accuracy of the satellite positioning system for estimating the position of the device; and estimating the position of the device using the satellite positioning based estimate to an extent determined taking into account the (fifth) indicator.

Typically the method further comprises receiving third satellite positioning signals from one or more satellites of the satellite positioning system; processing the third satellite positioning signals to determine a third satellite positioning based estimate of the position of the device; and determining a distribution (e.g. standard deviation) of the first, second and third satellite positioning based signals to determine the fifth indicator.

The method may further comprise comparing the said distribution to one or more distribution criteria and determining the fifth indicator responsive to whether and/or to what extent the distribution meets the distribution criteria. The distribution criteria may comprise or consist of a threshold value to which the distribution is compared. The threshold value may be an absolute value (e.g. 1m, 0.5m, 0.2m) or a relative value (e.g. half, a quarter or an eighth of the expected error of the position estimate of the device when the device is moving at 1.5m/s in open space at the equator).

Typically, if the distribution meets one or more distribution criteria (e.g. is less than or greater than a or the threshold value), the fifth accuracy indicator is set to a first value and if the first position does not meet the said one or more proximity criteria with respect to the first position, the fifth accuracy indicator is set to a second value. Setting the fifth accuracy indicator to the first value is typically indicative that the satellite positioning system is likely to be inaccurate. This is because position estimates provided by satellite positioning systems typically have a degree of error associated with them, so successive position estimates which are very close together or identical are likely to be inaccurate. Alternatively, the fifth indicator may have a value indicative of to what extent the distribution meets the distribution criteria.

The device may determine the fifth accuracy indicator, or a or the server may determine the fifth accuracy indicator. The device may determine the first and/or second and/or third satellite positioning based estimates of the position of the device, and/or the server may determine the first and/or second and/or third satellite positioning based estimates of the position of the device. Where the server determines the satellite positioning based estimate(s), the method may comprise transmitting the received first and/or second and or third satellite positioning signals, or signals derived therefrom, to the server.

It will be understood that a satellite positioning module of the device typically receives the first and second (and, where provided, third) satellite positioning signals.

Typically, the second satellite positioning based position estimate is determined immediately after the first satellite positioning based position estimate (i.e. without any other satellite positioning based position estimates of the device being determined between the first and second position estimate determinations) and, where provided, the third satellite positioning based estimate is determined immediately after the second. The first of the second satellite positioning signals may be received immediately after the last of the first satellite positioning signals (i.e. without any other satellite positioning signals being received from a satellite of the satellite positioning signals between the last of the first satellite positioning signals and the first of the second satellite positioning signals) and, where provided, the first of the third satellite positioning signals may be received immediately after the last of the second satellite positioning signals.

The method may further comprise: providing orbital positioning data indicative of the orbital positions of two or more satellites of the satellite positioning system including the said one or more satellites from which satellite positioning data was received to determine the satellite positioning based estimate of the position of the device (and typically one or more satellites from which no satellite positioning data was received to determine the satellite positioning based estimate of the position of the device); comparing the number of the said one or more satellites to the number of satellites identified in the orbital positioning data to determine a (sixth) indicator of the accuracy of the satellite positioning based estimate; and estimating the position of the device using the satellite positioning based estimate to an extent determined taking into account the (sixth) indicator.

The sixth indicator may be dependent on whether the ratio of the number of the said one or more satellites from which satellite positioning data was received to determine the satellite positioning based estimate of the position of the device to the number of satellites identified in the orbital positioning data is greater or less than a threshold.

The orbital positioning data may comprise (or consist of) almanac (e.g. GPS almanac data of an assisted GPS satellite positioning system) or ephemeris data relating to the (or a plurality of the) satellites of the satellite positioning system. The almanac or ephemeris data may be obtained from data transmitted by the one or more of the said one or more satellites. The almanac or ephemeris data may be received by the device (e.g. from the one or more satellites). The almanac or ephemeris data may additionally or alternatively be obtained from a database stored in memory of the device or of one or more (or the) server computer(s). The ephemeris data may comprise data received from one or (typically) more satellites of the satellite positioning system (e.g. by the device and/or by one or more server computers), for example the satellites of the satellite positioning system (e.g. currently) being tracked by the device, and stored in a memory (e.g. of the device and/or by one or more server computers).

The method may further comprise identifying the said one or more satellites to determine the satellite positioning based estimate of the position of the device. In this case, the step of comparing the number of the said one or more satellites to the number of satellites identified in the orbital positioning data may comprise matching identifiers of the said one or more satellites to corresponding identifiers in the orbital positioning data. This ensures that the satellites from which signals have been received are satellites identified by the orbital positioning data.

The sixth indicator may be a ratio of the number of the said one or more satellites to the number of satellites identified by the orbital positioning data.

The method may further comprise: combining the accuracy indicator with a or the second accuracy indicator and/or a or the third accuracy indicator and/or a or the fourth accuracy indicator and/or a or the fifth accuracy indicator and/or a or the sixth accuracy indicator to provide a combined accuracy indicator; and estimating the position of the device using the satellite positioning based estimate to an extent determined taking into account the combined indicator.

The device may combine the accuracy indicators or a or the server may combine the accuracy indicators, or the device may combine two or more accuracy indicators to provide a first combined accuracy indicator and the server may combine two or more accuracy indicators to provide a second combined accuracy indicator and the device or the server may combine the first and second combined accuracy indicators to provide the said combined accuracy indicator.

The method may further comprise: applying a weighting to two or more of the accuracy indicator, a or the second accuracy indicator, a or the third accuracy indicator, a or the fourth accuracy indicator, a or the fifth accuracy indicator and/or a or the sixth accuracy indicator.

The device may weight the accuracy indicators or a or the server may weight the accuracy indicators.

The method may further comprise: combining the weighted accuracy indicator and/or the weighted second accuracy indicator and/or the weighted third accuracy indicator and/or the weighted fourth accuracy indicator and/or the weighted fifth accuracy indicator and/or the weighted sixth accuracy indicator to provide a combined weighted accuracy indicator; and estimating the position of the device using the satellite positioning based estimate to an extent determined taking into account the combined weighted accuracy indicator.

The device may combine the weighted accuracy indicators or a or the server may combine the weighted accuracy indicators, or the device may combine two or more weighted accuracy indicators to provide a first weighted combined accuracy indicator and the server may combine two or more weighted accuracy indicators to provide a second weighted combined accuracy indicator and the device or the server may combine the first and second weighted combined accuracy indicators to provide the said combined weighted accuracy indicator.

A second aspect of the invention provides data processing apparatus for estimating the position of a device, the data processing apparatus comprising: two or more positioning modules including a satellite positioning module configured to receive satellite positioning signals from one or more satellites of a satellite positioning system, to determine a satellite positioning based estimate of the position of the device from the received satellite positioning signals and to obtain orbital positioning data indicative of an orbital position of each of the said one or more satellites; and a controller in communication with the positioning modules, the controller being configured to determine an indicator of the accuracy of the satellite positioning based estimate taking into account the said orbital positioning data.

The controller may further be configured to estimate the position of the device using a or the satellite positioning based estimate of the position of the device to an extent determined taking into account the accuracy indicator.

The other of the two or more positioning modules may comprise: a positioning module operable to receive and processing signals from one or more wireless access points (e.g. Wi-Fi access points or Bluetooth access points) of known position to estimate the position of the device; and/or a positioning module operable to process signals from one or more sensors (e.g. compass, accelerometer) contained within the device in order to estimate a motion vector and to combine the estimated motion vector with a previously estimated position of the device to estimate an updated position of the device.

Typically the two positioning modules are positioning modules of the device. The controller may be provided in/on the device or in/on a server in communication with the device. The controller may, for example, be a remote service in electronic communication with the satellite positioning module. The controller may be in communication with the satellite positioning module by wired and/or (more typically) wireless connections. The controller may be distributed, for example, between the device and one or more server computers (and even the satellite positioning module). The controller may be integrated into the device. The controller may comprise one or more processors, such as a microcontroller, (each of) which executes a stored program in use.

The controller may be configured to: calculate a probability as to whether the device is indoors or outdoors taking into account the said orbital positioning data, and to determine the said indicator taking into account the said probability.

Additionally or alternatively, the controller may be configured to: calculate a probability as to whether the device is at a position which meets one or more proximity criteria with respect to one or more satellite positioning signal blocking features taking into account the said orbital positioning data, and to determine the said indicator taking into account the said probability.

The orbital positioning data may comprise an azimuth and/or elevation of each of the said one or more satellites. The satellite positioning module may be configured to determine the azimuths and/or elevations of each of the said one or more satellites. The satellite positioning module may be configured to transmit the determined azimuths and/or elevations to the controller.

The said indicator of the accuracy of the satellite positioning estimate may be indicative of an azimuthal distribution of the said one or more (typically two or more, or three or more) satellites around the device. The controller may be configured to determine the indicator by defining two or more (typically three or more) azimuth sectors (e.g. with reference to the device), each azimuth sector comprising a (different) portion of a 360° azimuth range surrounding the device, and determining (typically using the orbital positioning data) the number of azimuth sectors from which one or more satellite positioning signals were received to determine the said satellite positioning based estimate of the position of the device (i.e. in which one or more satellites were detected). The accuracy indicator may be dependent on (or be) the number of azimuth sectors in which at least one satellite was detected.

The controller may be configured to determine an elevation of the said one or more (typically two or more, or three or more) satellites.

The controller may be configured to determine the said indicator of the accuracy of the satellite positioning based estimate taking into account the determined elevations of the one or more satellites.

The controller may be configured to determine the said indicator of the accuracy of the satellite positioning based estimate taking into account an elevational distribution of the elevations of the said one or more (typically two or more, or three or more) satellites (e.g. relative to the device). Taking into account the elevational distribution may comprise defining two or more elevation sectors, each elevation sector comprising a (different) portion of a 90° elevation range (e.g. from the device), and determining (typically using the orbital positioning data) the number of elevation sectors from which one or more satellite positioning signals were received to determine the said satellite positioning based estimate of the position of the device (i.e. in which at least one satellite was detected). The accuracy indicator may be dependent on the number of elevation sectors in which at least one satellite was detected.

The controller may be configured to estimate the position of the device using a or the satellite positioning based estimate of the position of the device, an alternative estimate of the position of the device or a combination of a or the satellite positioning based estimate and an alternative estimate of the position of the device. The elevation sectors may then be defined relative to the said estimated position of the device.

The controller may thus be configured to: define a plurality of regions, each region comprising a portion of a 360° azimuthal range surrounding the device and/or a portion of a 90° elevation range defined relative to the device; use the orbital positioning data to determine the number of regions from which satellite positioning signals have been received to determine the satellite positioning based estimate(s) of the position of the device; and determine the indicator taking into account the determined number of regions.

The controller may be configured to define a plurality of regions, each region comprising a (different) combination of a portion of the 360° azimuthal range surrounding the device and a portion of the 90° elevation range from the device, and to determine (typically using the orbital positioning data) the number of regions from which one or more satellite positioning signals were received to determine the said satellite positioning based estimate of the position of the device (i.e. in which (i.e. in which at least one satellite was detected). The accuracy indicator may be dependent on the number of regions in which at least one satellite was detected.

The controller may be configured to obtain an estimate of the position of the device (e.g. a or the satellite positioning based estimate of the position of the device, an alternative estimate of the position of the device or a combination of a or the satellite positioning based estimate and an alternative estimate of the position of the device). The regions may then be defined relative to the said estimated position of the device.

The azimuths and/or elevations of the satellites may be measured with respect to (typically a reference position on) a reference plane defined relative to the device. The reference plane may be dependent on the device orientation. The reference plane may be defined, for example, by the device (e.g. the reference plane may be a plane occupied by the flat screen of a mobile smartphone). Alternatively, the azimuths and/or elevations of the satellites may be determined relative to a plane independent of the orientation of the device. The satellite positioning module or the controller may be configured to obtain orbital positioning data (e.g. the satellite positioning module may be configured to receive almanac or ephemeris data from a or the satellite, and optionally to transmit the orbital positioning data to the controller, or the satellite positioning module or the controller may be configured to retrieve almanac or ephemeris data from a memory (e.g. a memory of the device and/or a memory of one or more servers). The reference position may be an estimated position of the device (e.g. a or (one of) the satellite positioning based estimates) or the closest point on the reference plane to an estimated position of the device.

In some embodiments, the controller may be configured to select an estimate of the position of the device from a plurality of estimates of the position of the device including the satellite positioning based estimate of the position of the device provided by the satellite positioning module, each estimate being provided by a different positioning module. In this case, the extent to which the satellite positioning based estimate is used may be to no extent (i.e. the satellite positioning based estimate is not taken into account at all) or to a full extent (i.e. the satellite positioning based estimate is taken as the estimate of the position of the device).

Even when the satellite positioning based estimate is not taken into account to any extent at all (or to a limited extent - for example if the satellite positioning based estimate contributes less than 20%, or less than 10% to the position estimate) to estimate the position of the device, the controller or the satellite positioning module may be configured to store the satellite positioning based estimate in a memory (e.g. a memory of the device or of one or more server computers). In this case, the stored satellite positioning based estimate may be tagged (e.g. by the controller) to indicate that it was likely to have been of poor quality and/or that it was unusable.

The controller may be configured to determine a weighted average (e.g. weighted mean) of a plurality of estimates of the position of the device (each of which is typically provided by a different positioning module) including the satellite positioning based estimate of the position of the device. That is, the controller may be configured to determine a plurality of estimates of the position of the device, apply a weighting to each of the estimates of the position of the device, and estimate the position of the device by averaging (e.g. by taking a mean value of) the weighted estimated positions. In this case, the weighting applied to the satellite positioning based estimate may be determined taking into account the said indicator.

The extent to which the satellite positioning based estimate is used to estimate the position of the device may depend on accuracy indicators relating to one or more estimates of the position of the device other than the satellite positioning based estimate. The controller may be configured to determine one or more indicators indicative of the accuracy of the position estimates provided by the said one or more other positioning modules.

The controller may be configured to display the position of the device estimated using the satellite positioning based estimate to the extent determined taking into account the said indicator.

The device may be a personal electronic device such as a mobile positioning device or a personal computing device (e.g. a mobile smartphone, tablet computer or laptop computer).

The device may further comprise one or more accelerometers, a processor, a orientation sensing device (e.g. compass) and/or an altitude sensing device (such as a barometer).

The controller may be configured to determine the orientation of the device by processing vertical acceleration data from the accelerometer. Obtaining the orientation of the device can help the controller to define the (azimuth/elevation) reference plane.

The satellite positioning system may be a Global Positioning System (GPS), assisted GPS, GLONASS or any other satellite positioning system.

The controller may be configured to identify one or more azimuth and/or elevation sectors or one or more regions, or one or more groups of azimuth and/or elevation sectors or one or more groups of regions, in which no satellites were detected (i.e. from which no satellite positioning signals were received in the determination of the satellite positioning based estimate of the position of the device). The controller may be configured to compare the said one or more identified sectors, regions or groups of sectors or regions with almanac (e.g. GPS almanac data of an assisted GPS satellite positioning system) or ephemeris data relating to one or more satellites of the satellite positioning system including one or more satellites from which no satellite positioning data was received to determine the said satellite positioning based estimate to determine whether any satellites were located in the said sectors or regions when the satellite positioning signals from the said one or more satellites (from which the satellite positioning based estimate was derived) were received. Responsive to a determination that one or more satellites were located in the said sectors or regions, the controller may be configured to store in memory (e.g. memory of the device or of one or more servers) an estimated position of the device (e.g. the (or one of the) satellite positioning based estimate(s) of the device or the estimated position of the device taking into account the satellite positioning based estimate to an extent determined taking into account the said indicator) where the satellite positioning signals from the said satellites located in said sectors or regions were (at least apparently) blocked. The controller may be configured to store data identifying the said sectors or regions in which the said satellites were located. The controller may be configured to determine an estimated position of the one or more satellite blocking features (which may have been responsible for blocking satellite positioning signals from the satellite(s) located in the said regions/sectors) and to store the estimated position(s) of the satellite blocking feature(s) in memory (e.g. of the device or of a server). If the azimuths/elevations of the satellites are defined relative to a plane dependent on the orientation of the device, determining the estimated positions of the satellite positioning signal blocking features may involve determining an orientation of the device.

The controller may be adapted to facilitate the building of a database of location specific geographical descriptive data comprising estimated positions of a or the device where the satellite positioning signals from one or more satellites of the satellite positioning system are likely to be blocked and/or estimated positions of one or more satellite positioning signal blocking features. Where both the estimated positions of a or the device where the satellite positioning signals from one or more satellites of the satellite positioning system are blocked and estimated positions of one or more satellite positioning signal blocking features are provided, the estimated positions of the one or more satellite positioning signal blocking features may be associated with the positions of a or the device where the satellite positioning signals were blocked by the said satellite positioning signal blocking features. The database of location specific geographical descriptive data may further comprise data identifying the said sectors or regions in which the said satellites (whose positioning signals were blocked) were located.

The controller may be configured to store data relating to the time and/or date at which the satellite positioning signals were received to determine the satellite positioning based estimate of the position of the device. Such data may be associated with the stored estimated positions of the device or of the one or more satellite positioning signal blocking features. This can be useful for determining whether stored data may be out of date, or to account for satellite positioning signal blocking features (such as trains or busses) which may be movable but may have predictable positions at certain times of the day.

The controller may be configured to: obtain further satellite positioning data relating to the orbital positions of one or more satellites of the satellite positioning system different from the said one or more satellites from which satellite positioning signals were received to determine the satellite positioning based estimate of the position of the device; and store the further satellite positioning data (e.g. in a database of location specific geographical descriptive data) with reference to an estimated position of the device and/or time.

Typically the estimated position of the device is an estimated position of the device when the said satellite positioning signals were received from which the satellite positioning based estimate was determined.

Typically the time is the time of day and/or date at which the said satellite positioning signals were received. Alternatively the time may be the time of day and/or date at which the further satellite positioning data was stored (for example).

In order to obtain the further satellite positioning data, the controller may be further configured to: obtain satellite positioning data relating to (e.g. the orbital positions of) a plurality of satellites of the satellite positioning system including the said one or more satellites from which satellite positioning signals were received and one or more further satellites of the satellite positioning system; identify the said one or more satellites from which satellite positioning signals were received; and compare the identified satellites with the satellite positioning data to identify one or more satellites different to the said one or more satellites from which satellite positioning signals were received to determine the satellite positioning based estimate of the position of the device.

The further satellite positioning data may relate to the azimuth(s) and/or elevation(s) of the said satellites defined with reference to a or the reference plane and/or with reference to an estimated position and/or orientation of the device.

The controller may be further configured to: store an estimated position of the device at which the said satellite positioning signals were received and/or data identifying the said one or more satellites from which satellite positioning signals were received to determine the satellite positioning based estimate and/or data identifying one or more satellites of the satellite positioning system from which no satellite positioning signals were received to determine the satellite positioning based estimate and/or time data relating to the time of day and/or date at which the satellite positioning signals were received to determine the satellite positioning based estimate.

The controller may be configured to: define a plurality of regions, each region comprising a portion of a 360° azimuthal range surrounding the device and/or a portion of a 90° elevation range defined relative to the device; determine one or more regions from which no satellite positioning signals were received to determine the satellite positioning based estimate of the position of the device; obtain further satellite positioning data relating to the orbital positions of one or more satellites of the satellite positioning system different from the said one or more satellites from which satellite positioning signals were received to determine the satellite positioning based estimate of the position of the device; compare the said one or more regions with the further satellite positioning data to determine whether one or more satellites of the satellite positioning system were located in the said one or more regions when the said satellite positioning signals were received; and, responsive to a determination that one or more satellites were located in one or more of the said regions, store the further satellite positioning data (e.g. with reference to an estimated position of the device and/or time) and/or an estimated position of the device at which the said satellite positioning signals were received and/or data identifying the said region(s) in which the said satellites from which no satellite positioning signals were received were located and/or data identifying the said one or more satellites from which satellite positioning signals were received to determine the satellite positioning based estimate and/or data identifying one or more satellites of the satellite positioning system from which no satellite positioning signals were received to determine the satellite positioning based estimate and/or time data relating to the time of day and/or date at which the satellite positioning signals were received to determine the satellite positioning based estimate. The said data is typically stored in the database of location specific geographical descriptive data.

The controller may be further configured to: determine an estimated position of one or more satellite blocking features (e.g. between the estimated position of the device and the said one or more regions) and/or an estimated position of at least part of the perimeter of one or more satellite positioning signal blocking features; and store the estimated position(s) of the satellite blocking feature(s) and/or an estimated position of at least part of the perimeter of one or more satellite positioning signal blocking features. Again, the said estimated positions may be stored in the database of location specific geographical descriptive data. Alternatively, the controller may not be configured to determine and/or store estimated position(s) of the satellite positioning signal blocking features.

A plurality of position estimates may need to be performed before the estimated position of the one or more satellite positioning signal blocking features and/or an an estimated position of at least part of the perimeter of one or more satellite positioning signal blocking features can be determined to a satisfactory level of accuracy. Accordingly, the controller may be further configured to: determine a plurality of estimated positions of the device before determining the estimated position of one or more satellite blocking features and/or an estimated position of at least part of the perimeter of one or more satellite positioning signal blocking features.

As explained above, any of the data stored in the database of location specific geographical descriptive data may be used subsequently in the estimation of the position of a or the device.

The controller may be configured to: determine a signal to noise ratio and/or a signal power of the said satellite positioning signals received from the said one or more satellites; derive a (second) accuracy indicator from the signal to noise ratio and/or signal power; and estimate the position of the device using the satellite positioning based estimate to an extent determined taking into account the (second) accuracy indicator.

The signal to noise ratio and/or signal power are typically an average (e.g. mean, mode or median) signal to noise ratio and/or an average (e.g. mean, mode or median) signal power. A low signal to noise ratio and/or low signal power may indicate that the satellite positioning based estimate is likely to be inaccurate, and so for example may only be taken into account to a limited extent in the estimation of the position of the device.

The data processing apparatus may further comprise an altitude determining module configured to obtain altitude data indicative of an altitude of the device. The altitude determining module may be in communication with the controller. The altitude determining module may be an altitude sensor configured to determine the altitude of the device. Alternatively the altitude determining module may be computer readable code which is executable by the controller to obtain altitude data indicative of an altitude of the device, e.g. from the satellite positioning based estimate of the position of the device, from data obtained from the other positioning module(s), or from a database (or some other source).

The controller may be configured to derive a (third) accuracy indicator from the altitude data. The controller may be configured to estimate the position of the device using the satellite positioning based estimate to an extent determined taking into account the (third) indicator.

The altitude data may be absolute altitude data (e.g. provided by processing altitude sensing data provided by an altitude sensor, such as a barometer, of the device) or relative altitude data (e.g. the altitude of the device relative to a local ground level, in which case the altitude of a local ground level may be provided by a or the database of location specific geographical descriptive data, the absolute altitude of the device may be provided by an altitude sensor, such as a barometer, of the device, and the relative altitude data may be determined by subtracting the altitude of the local ground level form the absolute altitude).

The altitude data (and thus the third indicator) may provide an indication that the device is on an upper floor of a high-rise building and that, accordingly, the device is indoors. If the device is indoors, the likelihood of the satellite positioning based estimate being inaccurate increases. Accordingly, by taking into account the third indicator, more emphasis may be put on a position estimate obtained by an alternative positioning module if the third indicator indicates that the device is likely to be indoors.

The controller may be configured to: obtain a first estimate of the position of the device; determine whether the first estimated position meets one or more proximity criteria with respect to one or more satellite positioning signal blocking features by comparing the first estimated position of the device to location specific geographical descriptive data indicative of the positions of the said one or more satellite positioning signal blocking features; derive a (fourth) accuracy indicator responsive to the determination of whether the first estimated position of the device meets the said one or more proximity criteria; and estimate the position of the device using the satellite positioning based estimate to an extent determined taking into account the (fourth) indicator.

The location specific geographical descriptive data (typically obtained from a database of location specific geographical descriptive data) may comprise (e.g. geophysical) mapping information, urban area mapping information, internal layout information of one or more buildings (e.g. including the positions of windows and opaque walls), and/or one or more paths defining a range of possible positions of the device along a respective route within and/or adjacent to a building. The location specific geographical descriptive data (and thus the database) may also comprise estimated positions of a or the device where the satellite positioning signals from one or more satellites of the satellite positioning system are likely to be blocked and/or estimated positions of one or more satellite positioning signal blocking features and/or data identifying the said azimuth and/or elevation sectors or regions (see above) from which positioning signals are likely to be blocked.

The said proximity criteria may include: whether the device is positioned within a predetermined distance of a satellite positioning signal blocking feature; whether the device is positioned within a predetermined distance of an estimated position of a or the device where the satellite positioning signals from one or more satellites of the satellite positioning system are likely to be blocked; and/or whether the device is approaching a satellite positioning signal blocking feature or an estimated position of a or the device where the satellite positioning signals from one or more satellites of the satellite positioning system are likely to be blocked.

The controller is typically configured to estimate the first position of the device before the position of the device is estimated using the satellite positioning based estimate to an extent determined taking into account the fourth indicator.

The satellite positioning module may be configured to obtain one or more first satellite positioning signals from one or more satellites of a satellite positioning system; to process the received satellite positioning signals to determine a first satellite positioning based estimate of the position of the device; obtain one or more second satellite positioning signals from one or more satellites of the satellite positioning system; process the received second satellite positioning signals to determine a second satellite positioning based estimate of the position of the device; and provide the first and second satellite positioning based estimates to the controller.

The controller may be configured to: compare the first position to the second position to determine a (fifth) indicator of the accuracy of the satellite positioning system for estimating the position of the device; and to estimate the position of the device using the satellite positioning based estimate to an extent determined taking into account the (fifth) indicator.

Typically the satellite positioning module is configured to receive third satellite positioning signals from one or more satellites of the satellite positioning system; and to process the third satellite positioning signals to determine a third satellite positioning based estimate of the position of the device. The controller may be configured to determine a distribution (e.g. standard deviation) of the first, second and third satellite positioning based signals to determine the fifth indicator.

The controller may be configured to compare the said distribution to one or more distribution criteria and determine the fifth indicator responsive to whether and/or to what extent the distribution meets the distribution criteria. The distribution criteria may comprise or consist of a threshold value to which the distribution is compared. The threshold value may be an absolute value (e.g. 1m, 0.5m, 0.2m) or a relative value (e.g. half, a quarter or an eighth of the expected error of the position estimate of the device when the device is moving at 1.5m/s in open space at the equator).

Typically, if the distribution meets one or more distribution criteria (e.g. is less than or greater than a or the threshold value), the fifth accuracy indicator is set to a first value and if the first position does not meet the said one or more proximity criteria with respect to the first position, the fifth accuracy indicator is set to a second value. Setting the fifth accuracy indicator to the first value is typically indicative that the satellite positioning system is likely to be inaccurate. This is because position estimates provided by satellite positioning systems typically have a degree of error associated with them, so successive position estimates which are very close together or identical are likely to be inaccurate. Alternatively, the fifth indicator may have a value indicative of to what extent the distribution meets the distribution criteria.

Typically, the second satellite positioning based position estimate is determined immediately after the first satellite positioning based position estimate (i.e. without any other satellite positioning based position estimates of the device being determined between the first and second position estimate determinations) and, where provided, the third satellite positioning based estimate is determined immediately after the second satellite positioning based estimate. The first of the second satellite positioning signals may be received immediately after the last of the first satellite positioning signals (i.e. without any other satellite positioning signals being received from a satellite of the satellite positioning signals between the last of the first satellite positioning signals and the first of the second satellite positioning signals) and, where provided, the first of the third satellite positioning signals may be received immediately after the last of the second satellite positioning signals.

The controller may be configured to: obtain (e.g. retrieve from a memory or obtain from the satellite positioning module) orbital positioning data indicative of the orbital positions of two or more satellites of the satellite positioning system including the said one or more satellites from which positioning data was received to determine the satellite positioning based estimate of the position of the device (and typically one or more satellites from which no satellite positioning data was received to determine the satellite positioning based estimate of the position of the device); compare the number of the said one or more satellites to the number of satellites identified in the orbital positioning data to determine a (sixth) indicator of the accuracy of the satellite positioning based estimate; and estimate the position of the device using the satellite positioning based estimate to an extent determined taking into account the (sixth) indicator.

The sixth indicator may be dependent on whether the ratio of the number of the said one or more satellites from which satellite positioning data was received to determine the satellite positioning based estimate of the position of the device to the number of satellites identified in the orbital positioning data is greater or less than a threshold.

The orbital positioning data may comprise (or consist of) almanac (e.g. GPS almanac data of an assisted GPS satellite positioning system) or ephemeris data relating to the (or a plurality of the) satellites of the satellite positioning system. The almanac or ephemeris data may be obtained from data transmitted by the one or more of the said one or more satellites. The almanac or ephemeris data may be received by the device. The almanac or ephemeris data may additionally or alternatively be obtained from a database stored in memory of the device or of one or more (or the) server computer(s). The ephemeris data may comprise data received from one or (typically) more satellites of the satellite positioning system (e.g. by the device and/or by one or more server computers), for example the satellites of the satellite positioning system (e.g. currently) being tracked by the device, and stored in a memory (e.g. of the device and/or by one or more server computers).

The controller may be configured to identify the said one or more satellites from which positioning data was received to determine the satellite positioning based estimate of the position of the device. In this case, comparing the number of the said one or more satellites from which positioning data was received to the number of satellites identified in the orbital positioning data may comprise matching identifiers of the said one or more satellites to corresponding identifiers in the orbital positioning data. This ensures that the satellites from which signals have been received are satellites identified by the orbital positioning data.

The sixth indicator may be a ratio of the number of the said one or more satellites to the number of satellites identified by the orbital positioning data.

The controller may be configured to: combine the accuracy indicator with a or the second accuracy indicator and/or a or the third accuracy indicator and/or a or the fourth accuracy indicator and/or a or the fifth accuracy indicator and/or a or the sixth accuracy indicator to provide a combined accuracy indicator; and to estimate the position of the device using the satellite positioning based estimate to an extent determined taking into account the combined indicator.

The controller may be configured to: apply a weighting to two or more of the accuracy indicator, a or the second accuracy indicator, a or the third accuracy indicator, a or the fourth accuracy indicator, a or the fifth accuracy indicator and/or a or the sixth accuracy indicator.

The controller may be configured to: combine the weighted accuracy indicator and/or the weighted second accuracy indicator and/or the weighted third accuracy indicator and/or the weighted fourth accuracy indicator and/or the weighted fifth accuracy indicator and/or the weighted sixth accuracy indicator to provide a combined weighted accuracy indicator; and estimating the position of the device using the satellite positioning based estimate to an extent determined taking into account the combined weighted accuracy indicator.

It will be understood that, with respect to the accuracy indicators described above, first, second, third, fourth, fifth and sixth are to be regarded as mere labels of the indicators, and the fact that an indicator has been allocated a given label is not meant to necessarily imply that all other indicators having a label numbered lower than that indicator must be used in conjunction with that indicator. For example, use of the fourth accuracy indicator does not necessarily mean that second and third indicators are also required. The first and second aspects of the invention envisage use of the (first) accuracy indicator (derived taking into account the orbital positioning data) on its own or in combination with any one or more of the second, third, fourth, fifth and sixth indicator(s) as described.

A third aspect of the invention provides a method of estimating the position of a device, the method comprising: obtaining a first satellite positioning based estimate of the position of the device, the first satellite positioning based estimate being determined from first satellite positioning signals received from one or more satellites of a satellite positioning system; obtaining a second satellite positioning based estimate of the position of the device, the second satellite positioning based estimate being determined from second satellite positioning signals received from one or more satellites of a satellite positioning system; and determining an indicator of the accuracy of the satellite positioning system by comparing the first and second satellite positioning based estimates.

The method may further comprise: estimating the position of the device using a, or at least one of the, satellite positioning based estimate(s) of the position of the device to an extent determined taking into account the accuracy indicator.

Typically the method further comprises obtaining a third satellite positioning based estimate of the position of the device, the third satellite positioning based estimate being determined from third satellite positioning signals received from one or more satellites of the satellite positioning system; and determining a distribution (e.g. standard deviation) of the first, second and third satellite positioning based estimates to determine the indicator.

The method may further comprise comparing the said distribution to one or more distribution criteria and determining the indicator responsive to whether and/or to what extent the distribution meets the distribution criteria. The distribution criteria may comprise or consist of a threshold value to which the distribution is compared. The threshold value may be an absolute value (e.g. 1m, 0.5m, 0.2m) or a relative value (e.g. half, a quarter or an eighth of the expected error of the position estimate of the device when the device is moving at 1.5m/s in open space at the equator).

Typically, if the distribution meets one or more distributon criteria (e.g. is less than or greater than a or the threshold value), the accuracy indicator is set to a first value and if the first position does not meet the said one or more proximity criteria with respect to the first position, the accuracy indicator is set to a second value. Setting the accuracy indicator to the first value is typically indicative that the satellite positioning system is likely to be inaccurate. This is because position estimates provided by satellite positioning systems typically have a degree of error associated with them, so successive position estimates which are very close together or identical are likely to be inaccurate. Alternatively, the indicator may have a value indicative of to what extent the distribution meets the distribution criteria.

The device may determine the accuracy indicator, or a or the server may determine the accuracy indicator. The device may determine the first and/or second and/or third satellite positioning based estimates of the position of the device, or the server may determine the first and/or second and/or third satellite positioning based estimates of the position of the device. Where the server determines the satellite positioning based estimate(s), the method may comprise transmitting the received first and/or second and or third satellite positioning signals, or signals derived therefrom, to the server.

It will be understood that a satellite positioning module of the device typically receives the first and second (and, where provided, third) satellite positioning signals.

Typically, the second satellite positioning based position estimate is determined immediately after the first satellite positioning based position estimate (i.e. without any other satellite positioning based position estimates of the device being determined between the first and second position estimate determinations) and, where provided, the third satellite positioning based estimate is determined immediately after the second. The first of the second satellite positioning signals may be received immediately after the last of the first satellite positioning signals (i.e. without any other satellite positioning signals being received from a satellite of the satellite positioning signals between the last of the first satellite positioning signals and the first of the second satellite positioning signals) and, where provided, the first of the third satellite positioning signals may be received immediately after the last of the second satellite positioning signals.

A fourth aspect of the invention provides data processing apparatus for estimating the position of a device, the data processing apparatus comprising: two or more positioning modules including a satellite positioning module configured to receive satellite positioning signals from one or more satellites of a satellite positioning system and to determine satellite positioning based estimates of the position of the device from the received satellite positioning signals; and a controller in communication with the positioning system modules, the controller being configured to determine an indicator of the accuracy of the satellite positioning based estimates by comparing first and second satellite positioning based estimates of the position of the device obtained from the satellite positioning module.

The controller may be further configured to estimate the position of the device using a, or at least one of the, satellite positioning based estimate(s) of the position of the device to an extent determined taking into account the accuracy indicator.

Typically the controller is configured to determine a distribution (e.g. standard deviation) of first, second and third satellite positioning based estimates to determine the indicator.

The first and second (and third, where provided) satellite positioning based estimates are typically successive estimates.

The controller may be configured to compare the said distribution to one or more distribution criteria and determine the indicator responsive to whether and/or to what extent the distribution meets the distribution criteria. The distribution criteria may comprise or consist of a threshold value to which the distribution is compared. The threshold value may be an absolute value (e.g. 1m, 0.5m, 0.2m) or a relative value (e.g. half, a quarter or an eighth of the expected error of the position estimate of the device when the device is moving at 1.5m/s in open space at the equator).

Typically, if the distribution meets one or more distribution criteria (e.g. is less than or greater than a or the threshold value), the accuracy indicator is set to a first value and if the first position does not meet the said one or more proximity criteria with respect to the first position, the accuracy indicator is set to a second value. Setting the accuracy indicator to the first value is typically indicative that the satellite positioning system is likely to be inaccurate. This is because position estimates provided by satellite positioning systems typically have a degree of error associated with them, so successive position estimates which are very close together or identical are likely to be inaccurate. Alternatively, the indicator may have a value indicative of to what extent the distribution meets the distribution criteria.

A fifth aspect of the invention provides a method of estimating the position of a device, the method comprising: obtaining a satellite positioning based estimate of the position of the device, the satellite positioning based estimate being determined from satellite positioning signals received from one or more satellites of a satellite positioning system; obtaining altitude data indicative of an altitude of the device; and deriving an indicator of the accuracy of the satellite positioning based estimate from the altitude data.

Typically the method of the fifth aspect further comprises estimating the position of the device using the satellite positioning based estimate of the position of the device to an extent determined taking into account the accuracy indicator.

A sixth aspect of the invention provides data processing apparatus for estimating the position of a device, the data processing apparatus comprising: two or more positioning system modules for estimating the position of the device including a satellite positioning system module configured to receive satellite positioning signals from one or more satellites of a satellite positioning system and to determine a satellite positioning based estimate of the position of the device from the received satellite positioning signals; an altitude determining module configured to obtain altitude data indicative of an altitude of the device; and a controller in communication with the altitude determining module and the positioning system modules, the controller being configured to derive an accuracy indicator of the satellite positioning based estimates from altitude data obtained by the altitude determining module.

The controller may be further configured to estimate the position of the device using the satellite positioning based estimate of the position of the device to an extent determined taking into account the accuracy indicator.

It will be understood that the altitude determining module may comprise a sensor for sensing absolute altitude such as a barometer. Alternatively, the altitude determining module may comprise computer readable code executable by the controller to obtain the altitude data from one or more of the positioning modules, or to retrieve altitude data from a database of altitude data with which the altitude determining module is in communication (e.g. via the controller).

A seventh aspect of the invention provides a method of estimating a position of a device, the method comprising: obtaining a first estimated position of the device; determining whether the first estimated position of the device meets one or more proximity criteria with respect to one or more satellite positioning signal blocking features by comparing the first estimated position of the device to a location specific geographical descriptive data indicative of the positions of the one or more satellite positioning system blocking features; and deriving an accuracy indicator taking into account the determination of whether the first estimated position meets the said one or more proximity criteria.

The method may further comprise: obtaining a satellite positioning based estimate of the position of the device, the satellite positioning based estimate being determined from satellite positioning signals received from one or more satellites of a satellite positioning system; and estimating a second position of the device using the satellite positioning based estimate of the position of the device to an extent determined taking into account the accuracy indicator.

The first estimated position of the device may be (but is not necessarily) the satellite positioning based estimate.

The method may further comprise identifying one or more azimuth and/or elevation sectors or one or more regions (see above), or one or more groups of azimuth and/or elevation sectors or one or more groups of regions, in which no satellites are detected. The method may further comprise comparing the said one or more identified sectors, regions or groups of sectors or regions with almanac (e.g. GPS almanac data of an assisted GPS satellite positioning system) or ephemeris data relating to one or more satellites of the satellite positioning system to determine whether any satellites are located in the said sectors or regions. Responsive to a determination that one or more satellites are located in the said sectors or regions, the method may further comprise adding to the database an estimated position of the device (e.g. the satellite positioning based estimate of the position of the device, the first estimate of the position of the device or the second estimate of the position of the device) where the satellite positioning signals from the said satellites located in said sectors or regions are blocked. The method may further comprise adding to the database data identifying the said sectors or regions in which the said satellites were located. The method may further comprise determining an estimated position of the one or more satellite blocking features and storing the estimated position(s) of the satellite blocking feature(s) in the database. If the azimuths/elevations of the satellites are defined relative to the plane of the device, determining the estimated positions of the satellite positioning signal blocking features may involve determining an orientation of the device.

Accordingly, the method may further comprise: obtaining further satellite positioning data relating to the orbital positions of one or more satellites of the satellite positioning system different from the said one or more satellites from which satellite positioning signals were received to determine the satellite positioning based estimate of the position of the device; and storing the further satellite positioning data (e.g. in a database of location specific geographical descriptive data) with reference to an estimated position of the device and/or time.

In order to obtain the further satellite positioning data, the method may further comprise: obtaining satellite positioning data relating to (e.g. the orbital positions of) a plurality of satellites of the satellite positioning system including the said one or more satellites from which satellite positioning signals were received and one or more further satellites of the satellite positioning system; identifying the said one or more satellites from which satellite positioning signals were received; and comparing the identified satellites with the satellite positioning data to identify one or more satellites different to the said one or more satellites from which satellite positioning signals were received to determine the satellite positioning based estimate of the position of the device.

The further satellite positioning data may relate to the azimuth(s) and/or elevation(s) of the said satellites defined with reference to a or the reference plane and/or with reference to an estimated position and/or orientation of the device.

The method may further comprise: storing an estimated position of the device at which the said satellite positioning signals were received and/or data identifying the said one or more satellites from which satellite positioning signals were received to determine the satellite positioning based estimate and/or data identifying one or more satellites of the satellite positioning system from which no satellite positioning signals were received to determine the satellite positioning based estimate and/or time data relating to the time of day and/or date at which the satellite positioning signals were received to determine the satellite positioning based estimate.

The method may further comprise: defining a plurality of regions, each region comprising a portion of a 360° azimuthal range surrounding the device and/or a portion of a 90° elevation range defined relative to the device; determining one or more regions from which no satellite positioning signals were received to determine the satellite positioning based estimate of the position of the device; obtaining further satellite positioning data relating to the orbital positions of one or more satellites of the satellite positioning system different from the said one or more satellites from which satellite positioning signals were received to determine the satellite positioning based estimate of the position of the device; comparing the said one or more regions with the further satellite positioning data to determine whether one or more satellites of the satellite positioning system were located in the said one or more regions when the said satellite positioning signals were received; and, responsive to a determination that one or more satellites were located in one or more of the said regions, storing the further satellite positioning data (e.g. with reference to an estimated position of the device and/or time) and/or an estimated position of the device at which the said satellite positioning signals were received and/or data identifying the said regions in which the said satellites from which no satellite positioning signals were received were located and/or data identifying the said one or more satellites from which satellite positioning signals were received to determine the satellite positioning based estimate and/or data identifying one or more satellites of the satellite positioning system from which no satellite positioning signals were received to determine the satellite positioning based estimate and/or time data relating to the time of day and/or date at which the satellite positioning signals were received to determine the satellite positioning based estimate. The said data is typically stored in the database of location specific geographical descriptive data.

The method may further comprise: determining an estimated position of one or more satellite blocking features (e.g. between the estimated position of the device and the said one or more regions) and/or an estimated position of at least part of the perimeter of one or more satellite positioning signal blocking features; and storing the estimated position(s) of the satellite blocking feature(s) and/or the estimated position of at least part of the perimeter of one or more satellite positioning signal blocking features. Again, the said estimated positions may be stored in the database of location specific geographical descriptive data. Alternatively, the estimated position(s) of the satellite positioning signal blocking features may not be determined and/or stored.

A plurality of position estimates may need to be performed before the estimated position of the one or more satellite positioning signal blocking features and/or an an estimated position of at least part of the perimeter of one or more satellite positioning signal blocking features can be determined to a satisfactory level of accuracy. Accordingly, the method may further comprise: determining a plurality of estimated positions of the device before determining the estimated position of one or more satellite blocking features and/or an estimated position of at least part of the perimeter of one or more satellite positioning signal blocking features.

As explained above, any of the data stored in the database of location specific geographical descriptive data may be used subsequently in the estimation of the position of a or the device.

An eighth aspect of the invention provides data processing apparatus for estimating the position of a device, the data processing apparatus comprising: two or more positioning system modules for estimating the position of the device; a database of location specific geographical descriptive data indicative of the positions of one or more satellite positioning signal blocking features; and a controller configured to compare a first estimated position of the device provided by one of the positioning modules to location specific geographical descriptive data obtained from the database to determine whether the first estimated position meets one or more proximity criteria with respect to the said one or more satellite positioning signal blocking features, and to derive an accuracy indicator taking into account the determination of whether the first estimated position meets the said one or more proximity criteria.

The two or more positioning system modules may include a satellite positioning system module configured to receive satellite positioning signals from one or more satellites of a satellite positioning system and to determine a satellite positioning based estimate of the position of the device from the received satellite positioning signals. In this case, the controller may be further configured to determine a second estimated position of the device using the satellite positioning based estimate of the position of the device to an extent determined taking into account the accuracy indicator.

The database may comprise (e.g. geophysical) mapping information, urban area mapping information, internal layout information of one or more buildings (e.g. including the positions of windows and opaque walls), and/or one or more paths defining a range of possible positions of the device along a respective route within and/or adjacent to a building. The database may also comprise estimated positions of a or the device where the satellite positioning signals from one or more satellites of the satellite positioning system are likely to be blocked and/or estimated positions of one or more satellite positioning signal blocking features and/or data identifying azimuth and/or elevation sectors or regions in which the said satellites whose positioning signals are likely to be blocked.

A ninth aspect of the invention provides a method of estimating the position of a device comprising: obtaining a satellite positioning based estimate of the position of the device, the satellite positioning based estimate being determined from satellite positioning signals received from one or more satellites of a satellite positioning system; obtaining orbital positioning data indicative of the orbital positions of two or more satellites of the satellite positioning system including the said one or more satellites (and typically one or more satellites from which no satellite positioning data was received to determine the satellite positioning based estimate of the device); and comparing the number of the said one or more satellites from which positioning data was received to determine the satellite positioning based estimate of the position of the device to the number of satellites identified in the orbital positioning data to determine an indicator of the accuracy of the satellite positioning based estimate of the position of the device.

The method may further comprise: estimating the position of the device using the satellite positioning based estimate to an extent determined taking into account the said indicator.

The orbital positioning data may comprise (or consist of) almanac (e.g. GPS almanac data of an assisted GPS satellite positioning system) or ephemeris data relating to the (or a plurality of the) satellites of the satellite positioning system. The almanac or ephemeris data may be obtained from data transmitted by the one or more of the said one or more satellites. The almanac or ephemeris data may be received by the device. The almanac or ephemeris data may additionally or alternatively be obtained from a database stored in memory of the device or of one or more (or the) server computer(s). The ephemeris data may comprise data received from a plurality of satellites of the satellite positioning system (e.g. by the device and/or by one or more server computers) and stored in a memory (e.g. of the device and/or by one or more server computers).

The method may further comprise identifying the said one or more satellites from which positioning data was received to determine the satellite positioning based estimate of the position of the device. In this case, the step of comparing the number of the said one or more satellites from which positioning data was received to the number of satellites identified in the orbital positioning data may comprise matching identifiers of the said one or more satellites to corresponding identifiers in the orbital positioning data.

A tenth aspect of the invention provides data processing apparatus for estimating the position of a device, the data processing apparatus comprising: two or more positioning system modules for estimating the position of the device including a satellite positioning module configured to receive satellite positioning signals from one or more satellites of a satellite positioning system and to determine a satellite positioning based estimate of the position of the device from the received satellite positioning signals; a memory storing orbital positioning data indicative of the relative orbital positions of two or more satellites of the satellite positioning system including the said one or more satellites (and typically one or more satellites from which no satellite positioning data was received to determine the satellite positioning based estimate of the device); and a controller configured to compare the number of the said one or more satellites from which positioning data is received to determine the satellite positioning based estimate of the position of the device to the number of satellites identified in the orbital positioning data to determine an indicator of the accuracy of the satellite positioning based estimate of the position of the device.

The controller may be further configured to estimate the position of the device using the satellite positioning based estimate to an extent determined taking into account the said indicator.

It will be understood that any of the above data processing apparatus may comprise a personal electronic device, such as a mobile smartphone, tablet computer, laptop or personal data assistant, and/or a server computer. The personal electronic device may comprise the positioning modules. The controller may be provided on a or the server or on a or the personal electronic device. Location specific geographical descriptive data may be provided on a or the server computer and/or on a or the personal electronic device. Ephemeris and/or almanac data may be provided on a or the personal electronic device and/or on a or the server computer. A or the server computer may provide data (e.g. ephemeris data or almanac data) to a or the personal electronic device. The data processing apparatus may comprise a personal electronic device in electronic (e.g. radio, Wi-Fi, Bluetooth, and/or fixed line) communication with a server computer.

The invention also extends to any combination of the third, fifth, seventh and ninth aspects of the invention and to any combination of the fourth, sixth, eighth and tenth aspects of the invention. The invention also extends to a method of estimating the position of a device comprising: determining a combined accuracy indicator by combining the accuracy indicator of the third aspect of the invention and/or the accuracy indicator of the fifth aspect of the invention and/or the accuracy indicator of the seventh aspect of the invention and/or the accuracy indicator of the ninth aspect of the invention and/or an accuracy indicator derived from the signal to noise ratio and/or signal power of the satellite positioning signals received from the said one or more satellites; and estimating the position of the device using the satellite positioning based estimate to an extent determined taking into account the combined indicator.

The device may combine the accuracy indicators or a or the server may combine the accuracy indicators, or the device may combine two or more accuracy indicators to provide a first combined accuracy indicator and the server may combine two or more accuracy indicators to provide a second combined accuracy indicator and the device or the server may combine the first and second combined accuracy indicators to provide the said combined accuracy indicator.

The invention also extends to: applying a weighting to two or more of the accuracy indicator of the third aspect of the invention, the accuracy indicator of the fifth aspect of the invention, the accuracy indicator of the seventh aspect of the invention, the accuracy indicator of the ninth aspect of the invention and/or the accuracy indicator derived from the signal to noise ratio and/or signal power of the satellite positioning signals received from the said one or more satellites.

The device may weight the accuracy indicators or a or the server may weight the accuracy indicators.

The invention also extends to: determining a combined weighted accuracy indicator by combining the weighted accuracy indicator of the third aspect of the invention and/or the weighted accuracy indicator of the fifth aspect of the invention and/or the weighted accuracy indicator of the seventh aspect of the invention and/or the weighted accuracy indicator of the ninth aspect of the invention and/or the weighted accuracy indicator derived from the signal to noise ratio and/or signal power of the satellite positioning signals received from the said one or more satellites; and estimating the position of the device using the satellite positioning based estimate to an extent determined taking into account the combined weighted accuracy indicator.

Although the embodiments of the invention described with reference to the drawings comprise methods performed by computer apparatus, and also computing apparatus, the invention also extends to program instructions, particularly program instructions on or in a computer readable storage medium, adapted for carrying out the processes of the invention or for causing a computer to perform as the computer apparatus of the invention. Programs may be in the form of source code, object code, a code intermediate source, such as in partially compiled form, or any other form suitable for use in the implementation of the processes according to the invention. The computer readable storage medium may be any tangible entity or device capable of carrying the program instructions. For example, the computer readable medium may be a ROM, for example a CD ROM or a semiconductor ROM, or a magnetic recording medium, for example a floppy disc or hard disc.

The preferred and optional features discussed above are preferred and optional features of each aspect of the invention to which they are applicable. For the avoidance of doubt, the preferred and optional features of the first aspect of the invention may also be preferred and optional features in relation to the second, third, fourth, fifth, sixth, seventh, eighth, ninth and tenth aspects of the invention, where applicable.

Description of the Drawings

An example embodiment of the present invention will now be illustrated with reference to the following Figures in which:

Figure 1 is a block diagram of a personal electronic device in wireless communication with a server computer;

Figure 2 illustrates the estimation of the position of an electromagnetic signal source by the radio beacon positioning module of the device of Figure1 using triangulation;

Figures 3A and 3B are flow charts illustrating how the sensor based positioning module of the device of Figure 1 can be used to estimate the position of the device of Figure 1;

Figure 4 shows the personal electronic device of Figure 1 in a building having a roof which blocks satellite positioning signals from a satellite of a satellite positioning system reaching the personal electronic device;

Figure 5 is a schematic diagram of the device of Figures 1, 3 and 4 outside but adjacent to a building;

Figure 6 is a schematic diagram of eight azimuthal sectors defined around the device of Figures 1 and 3 and three elevation sectors defined with reference to the device of Figures 1 and 3; and

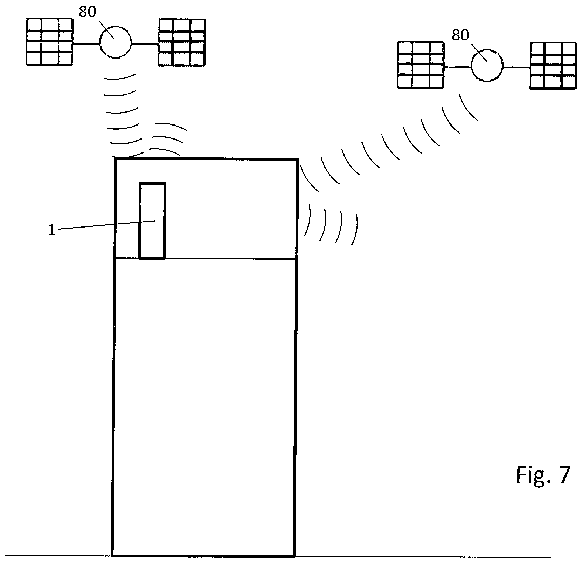

Figure 7 is a schematic diagram of the device of Figures 1, 3 and 4 on an upper floor of a high-rise building.

Detailed Description of an Example Embodiment

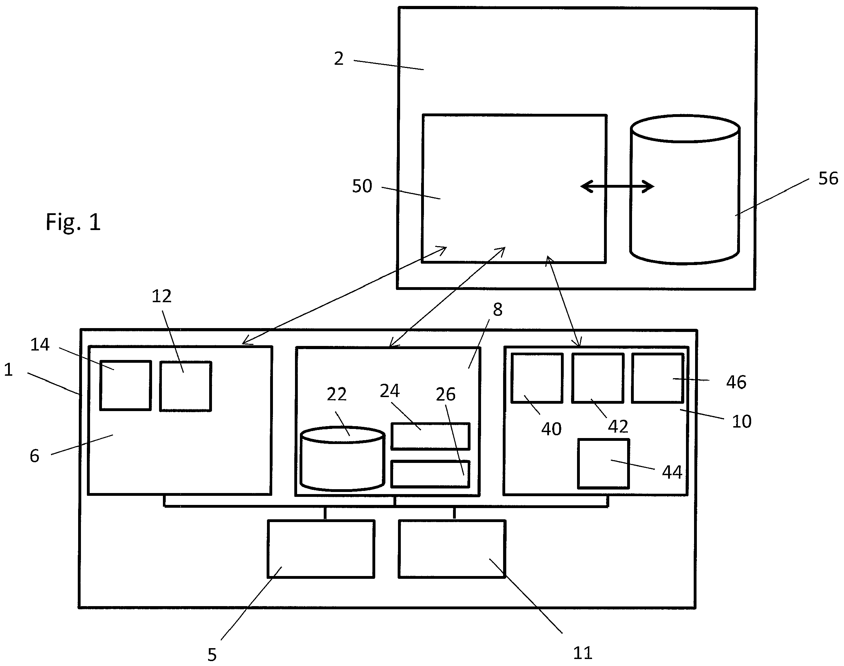

Figure 1 is a block diagram of a personal electronic device 1 in communication with a server computer 2 via a wireless and/or wired communications network 4. The personal electronic device 1 comprises a processor 5, a satellite positioning module 6, a radio beacon positioning module 8, a sensor based positioning module 10 and a memory 11. The positioning modules 6-10 are in communication with the processor 5 and/or the memory 11. The personal electronic device 1 may also comprise an altitude sensor 9, such as a barometer, in communication with the memory and/or processor 5.

The satellite positioning module 6 comprises a satellite positioning signal receiver 12 for receiving signals from satellites of a satellite positioning system such as the Global Positioning System (GPS), Assisted-GPS or GLONASS. The satellite positioning module 6 also comprises computer software 14 which is executed by the processor 5 of the personal electronic device to track satellites of the satellite positioning system and to determine satellite positioning based estimates of the position of the personal electronic device 1 from satellite positioning signals received by the receiver 12 from the satellites of the satellite positioning system. The computer software 14 of the satellite positioning module 6 may also be executed to obtain orbital positioning data relating to satellites of the satellite positioning system, such as almanac data (for example almanac data of Assisted GPS) or ephemeris data indicative of the orbital position of one or more satellites of the satellite positioning system. Almanac data relating to all of the satellites of the satellite positioning system may be received by the satellite positioning module 6 from a single one of the satellites of the satellite positioning system and stored in the memory 11. Ephemeris data relating to a single one of the satellites of the satellite positioning system may be received by the satellite positioning module from that satellite and stored in the memory 11. A database of ephemeris data relating to a plurality of satellites of the satellite positioning system may be built up in the memory 11 by (e.g. temporarily) storing the ephemeris data relating to a plurality of the satellites of the satellite positioning system. For example, the ephemeris data in the database may relate to all of the satellites being tracked by the satellite positioning module 6 at any given time. It will be understood that almanac data typically provides data relating to coarse orbital position estimates of the satellites, while ephemeris data typically provides data relating to finer estimates of the orbital position of the satellites. Ephemeris data and almanac data are only typically valid for certain time periods, and so some or all of the almanac/ephemeris data may be deleted and/or replaced periodically. Ephemeris or almanac data relating to one or (typically) more satellites of the satellite positioning system may alternatively be obtained from the server 2.

The radio beacon positioning module 8 comprises an electromagnetic signal receiver 20 operable to receive electromagnetic signals transmitted by one or more types of electromagnetic signal source (e.g. Wi-Fi, Bluetooth, GSM base stations, near-field-communication beacons etc.) of which the device 1 is within range. The radio beacon positioning module 8 may further comprise a database 22 of electromagnetic signal source identifiers together with associated known positions thereof, or a map 24 of electromagnetic signal source fingerprint data which associates expected received signal strengths from specific electromagnetic signal sources with given positions. The radio beacon positioning module 8 may have neither a database 22 nor a map 24 if, for example, the electromagnetic signal sources detectable by the electromagnetic receiver typically transmit their positions (e.g. Bluetooth Beacons). Alternatively, the database 22 or map 24 may be provided at the server 2. The radio beacon positioning module 8 further comprises computer software 26 which is configured to receive as an input data output by the electromagnetic signal receiver 20 following reception by the receiver 20 of electromagnetic signals transmitted by one or more electromagnetic signal sources. The software 26, which processes the signals output by the receiver 20 (where the positions of the electromagnetic signal sources are not provided in the electromagnetic signals transmitted thereby, together with the positions of the electromagnetic signal sources obtained from the database 22) to estimate a position of the device 1, is executed by the processor 5. In some embodiments, the radio beacon positioning module 8 may determine the position of the device 1 by triangulation.

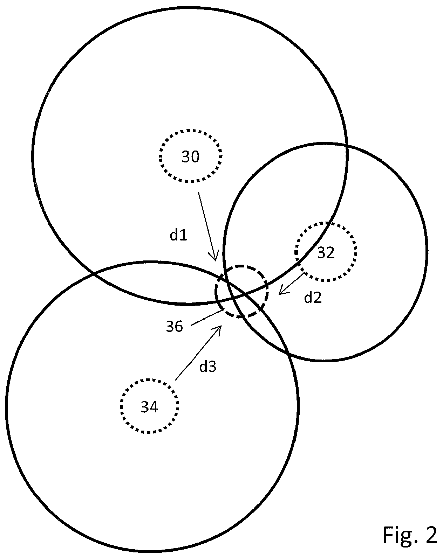

Triangulation is illustrated in Figure 2, which shows three different electromagnetic signal sources 30, 32, 34, each at a different location and transmitting electromagnetic signals received by the device 1 at an approximate region 36. The electromagnetic signal sources 30, 32, 34 are at a distance $d_1$, $d_2$, $d_3$ from the device 1 at approximate region 36. Each electromagnetic signal source 30, 32, 34 is surrounded by a circle representing the locus of all points at distance $d_n$. Here, $d_n$ may be derived from any available distance measurement models. For example, the strength (power) of an electromagnetic signal received by the device 1 may be described by following mathematical equation in free space:

$$P_r = \frac{P_t G_t G_r \lambda^2}{(4\pi)^2 d^2}$$

where $P_r$ is the received signal power from the WAP, Pt is a transmitted power from the electromagnetic signal source, $G_r$ and $G_t$ are receiver and transmitter antenna gains respectively, $\lambda$ is a signal wavelength and d is a distance between source and receiver. This equation can also be represented in terms of propagation gain (PG) as:

$$PG = \frac{P_r}{P_t G_t G_r} = (\frac{\lambda}{4\pi d})^2$$

and in decibels form as:

$$PG_{dB} = 20\log(\frac{\lambda}{4\pi d})$$

The free space model (equations) cannot easily be applied in real world environments without modifications because of the signal propagation uncertainties. Electromagnetic signal propagation can be affected by many factors such as signal attenuations and reflections (multipath effects) from the surfaces, building types, moving objects and people, transmission frequency, antenna heights and polarisation, and so on. However, various models exist to try to model different environments and signal propagation behaviour through them to determine the distance between receiver and source. For example, there are models available to predict signal behaviour for different indoor environments. One of the indoor models is described by the following equation:

$$PG_{dB} = 20\log(\frac{\lambda}{4\pi d_0}) + 10n\log(d/d_0) + X_\sigma$$

for $d > d_0$

where X, n and $d_0$ are the parameters which vary with different indoor environments and which can be determined empirically. For example, the values of X, n and $d_0$ for a typical hard partitioned office environment are 7.0, 3.0 and 100 respectively.

User input can be provided to select types of environment and then to use specific values of the abovementioned parameters stored in memory (that were for example previous input by the user or other operator). Alternatively, if user inputs are not available, default values can be chosen from the software configuration.

There are also models available for outdoor environments for example. One such model, designated as Stanford University Interim (SUI) Model, is described by the following equation:

$$PL = 20\log(\frac{4\pi d_0}{\lambda}) + 10n\log(\frac{d}{d_0}) + X_f + X_h + s$$

for $d > d_0$

PL is described as path loss and other parameters can be processed similarly as described in for indoor models, that is (for example) either through user inputs or from software configuration.

In each of the above equations, when all other parameters are known, the distance d can be readily deduced to determine distances $d_n$. The distances $d_n$ may then be used together with location co-ordinates of sites 30, 32, 34 in the following equation:

$$d_i = \sqrt{(x_r - x_{si})^2 + (y_r - y_{si})^2}$$

where $d_i$ is the distance, $x_r$ and $y_r$ are the x and y co-ordinates of the electromagnetic signal source and $x_{si}$ and $y_{si}$ are the x and y co-ordinates of places, where i is 1, 2, ...., n. Three equations are formed and solved for x and y co-ordinates of the device at region 36. These equations can be solved with any available methods such as the least squares method.

As shown in Figure 2, the co-ordinates for the device 1 in region 36 are where the three circles (the loci of the estimated distances from the electromagnetic signal sources) overlap. The circles may not overlap at a single point because of errors in the measurement/estimation of the distances $d_1$, $d_2$, $d_3$ and possible errors in the reference (or estimated) co-ordinates of the electromagnetic signal sources 30, 32, 34. However, it can be appreciated that the approximate position of the device 1 can be determined.

Alternatively the radio beacon positioning module 8 may estimate the position of the device 1 by matching strengths of signals received from one or more electromagnetic signal sources with expected received signal strengths provided in the map of fingerprint data to determine which position(s) on the map are consistent with the received signals.

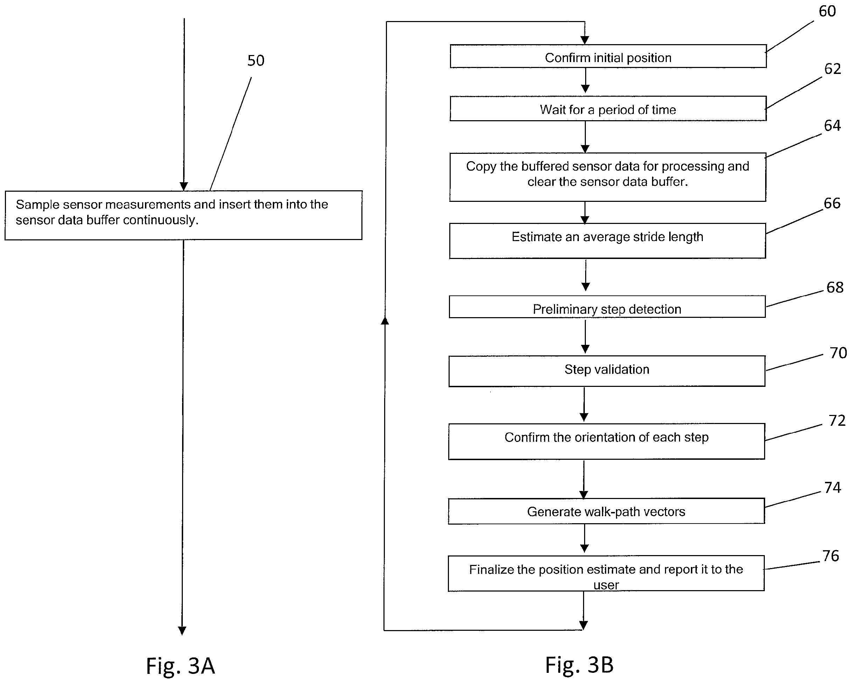

The sensor based positioning module 10 comprises an accelerometer 40 operable to measure the vertical acceleration of the device 1, a compass 42 operable to sense the orientation of the device 1, computer software 44 configured to receive as an input vertical acceleration data output by the accelerometer 40 and orientation data output by the compass 42, and optionally a gyroscope 46. The computer software 45, which is executed by the processor 5, is operable to process the vertical acceleration and orientation data to estimate the position of the device. This is explained as follows with reference to the flow charts of Figures 3A and 3B.

Figure 3A consists of the single step 50 of continuously sampling data measurements from the accelerometer 40 and the compass 42 and typically the gyroscope 46 and buffering the raw measurement data in a buffering section of the memory 11. Each vertical acceleration measurement made by the accelerometer 40 and each directional measurement made by the compass 42 and typically data measured by the gyroscope 46 are chronologically indexed by the controller. In a first step 60 of Figure 3B, an initial position of the device 1 is provided (e.g. by the server 2, the satellite positioning module 6, radio beacon module 8 or be a previously estimated position from the sensor based positioning module 10). In a second step 62, vertical acceleration data is collected from the accelerometer together with orientation data from the compass. In a third step 64, the buffered sensor data is copied to a processing section of the memory 11 for processing, and the buffer section of the memory 11 is cleared. In a next step 66, an average stride length of the user over the predetermined time period is estimated. At a next step 68, preliminary step detection is performed. In the next step 70, a step validation process is performed. In the next step 72, the orientation of the device is determined during each validated detected step.

Following detection and validation of the steps taken by the user, determination of the average stride length of the user, and the determination of the orientation of the device 1 from the compass/gyroscope measurements, a walk-path motion vector is generated in step 74 for each validated detected step. Each step is considered to have followed a distance equal to the average stride length in the direction derived from the orientation of the device 1 as described above. A plurality of the walk-path motion vectors may be subsequently combined if, for example, they indicate movement in the same direction. Once generated, the motion vectors are stored in a vector buffer of memory 11. An updated position of the device 1 can be determined in step 76 by combining the motion vectors with the initial position of the device 1. This updated position may then be reported to the user, for example by updating a position indicator on a map displayed on the device 1. The method of Figure 3B may then return to step 60 so that the above steps may be repeated.

Referring back to Figure 1, the server 2 comprises a controller 50, having one or more processors 52 (e.g. microcontrollers) and a memory 54, and a database of location specific geographical descriptive data 56. The controller 50 of the server 2 is in communication with the positioning modules 6-10. It will be understood that the software 14, 26, 44 may alternatively be run on the controller 50 of the server 2, in which case input data can be transmitted from the positioning modules 6-10 to the controller 50 for processing by the processor 52. Data stored on memory 11 may alternatively be stored in memory 54 and vice versa. The server 2 may be operable to transmit positioning data back to the device after processing is completed.

Any of the positioning modules 6-10 can be used in isolation or in combination to estimate the position of the device. Typically, the satellite positioning module determines a satellite positioning based estimate of the position of the device, the radio beacon positioning module determines a radio beacon based estimate of the position of the device and the sensor based positioning module determines a sensor based estimate of the position of the device. Each of the estimates of the position of the device are provided to the controller 50 which may select one of the estimates over the others; alternatively the controller 50 may combine the estimates to determine an average estimated position (e.g. mean co-ordinate) of the device 1. The controller 50 may then transmit the selected estimate (or an indication thereof) or the combined estimate (or an indication thereof) back to the device 1 where it may be displayed to a user. Advantageously, the most accurate of the positioning estimates is selected over the others as the estimated position of the device, or is weighted more heavily than the others when the estimates are combined to determine an average estimated position.

Typically when the device 1 is outdoors, the satellite positioning module 6 would be regarded as providing the most reliable estimate of the position of the device 1. When the device 1 is inside a building, lines of sight between the satellite positioning receiver of the satellite positioning module 6 are typically blocked by the fabric of the building which significantly reduces the accuracy of the position estimated by the satellite positioning module 6 (if a position can be determined at all). Accordingly, if the positions of (e.g. three or more) electromagnetic signal sources detectable by the radio beacon module 8 are known by the radio beacon module 8 (e.g. from a database 22 or from the signals themselves), the radio beacon module 8 may be considered to provide the most reliable estimate of the position of the device. If the device is indoors and insufficient electromagnetic signal sources whose position can be determined can be detected, the sensor based positioning module may be considered to provide the most reliable estimate of the position of the device.

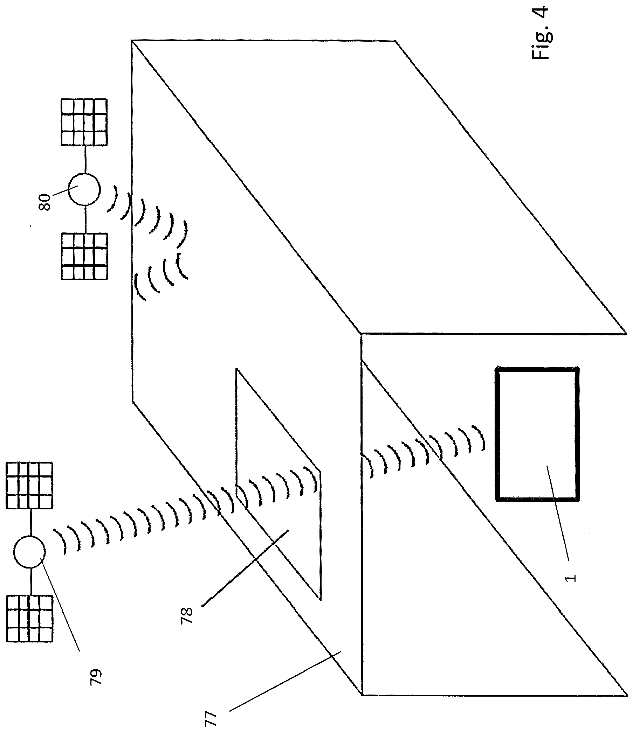

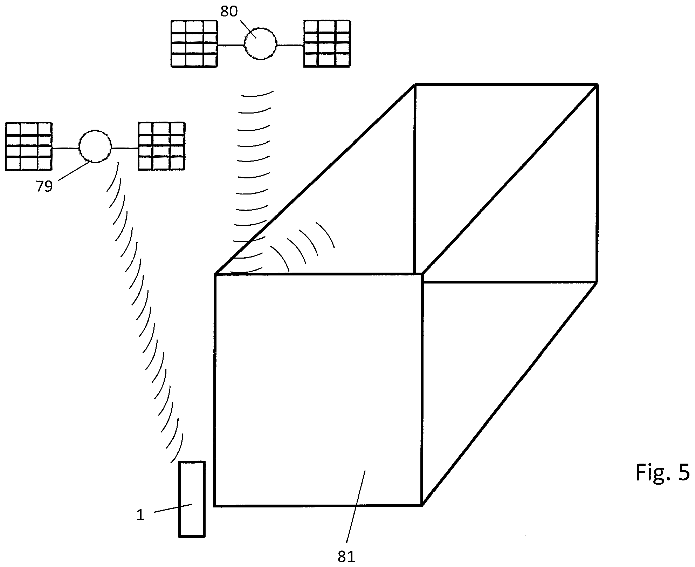

As illustrated in Figure 4, a building 77 may contain one or more windows 78, doors and/or transparent (e.g. glass) walls through which satellite positioning signals transmitted by one or more satellites 79 can propagate to the satellite positioning module 6, as well as opaque walls and/or a roof which block the line of sight between the satellite positioning module 6 and one or more satellites 80. It is therefore possible for the satellite positioning module 6 to receive satellite positioning signals inside a building 77. However, estimates of the position of the device 1 determined from such signals alone are typically inaccurate because they are received from satellites 79 located in only a narrow region of the sky relative to the device 1 and/or because they are likely to have been reflected (e.g. by one or more buildings) before reaching the device 1. Similarly, as shown in Figure 5, when the device 1 is outdoors but adjacent to one or more satellite positioning signal blocking features (such as tall buildings or cliff faces) which can block lines of sight between satellites 80 of the satellite positioning system and the satellite positioning module 6, satellite positioning signals may only be received by the satellite positioning module 6 from satellites 79 located in a narrow region of the sky and/or from other satellites whose transmitted satellite positioning signals have been reflected (e.g. by one or more buildings) before reaching the device 1. Thus, being outdoors but adjacent to one or more satellite positioning signal blocking features can also cause the satellite positioning module 6 to provide inaccurate estimates of the position of the device 1. In such situations, the radio beacon positioning module 8 or the sensors based positioning module 10 may provide more accurate estimates of the position of the device than the satellite positioning module 6.

To enable it to select what is likely to be the most accurate estimate of the position of the device, or to weight what is likely to be the most accurate estimate of the position of the device more heavily than the other estimated positions of the device, the controller 50 is configured to determine one or more indicators of the accuracy of the estimated position provided by the satellite positioning module 6. This provides the controller 50 with an indication of whether the satellite positioning based estimate of the position of the device should be preferred, or whether the estimates provided by the other positioning modules are likely to be more accurate.

One way in which the accuracy of the satellite positioning based estimate of the position of the device can be estimated is by measuring the signal power received by the satellite positioning receiver 12 and/or the signal to noise ratio of the signals received by the satellite positioning receiver 12. This information may be transmitted to the controller 50 from the satellite positioning module 6. More preferably an average (e.g. mean) signal power received by the satellite positioning receiver 12 and/or an average (e.g. mean) signal to noise ratio of the signals received by the satellite positioning receiver would be measured, for example over a predetermined time period (e.g. the time period over which signals are received from which the satellite positioning module determines the estimated position of the device). Generally, the greater the (average) signal strength/signal to noise ratio, the more likely it is that the satellite positioning based estimate of the position of the device will be accurate. Typically an indicator of the accuracy of the satellite positioning system may be calculated from the (average) signal strength/signal to noise ratios of the detected signals.

Another way in which the accuracy of the satellite positioning based estimate of the position of the device can be estimated is by obtaining orbital positioning data indicative of an orbital position of each of the said one or more satellites and determining an indicator of the accuracy of the satellite positioning based estimate taking into account (e.g. from) the orbital positioning data. Typically, the indicator is indicative of the distribution around the device of the satellites from which satellite positioning signals were received to determine the satellite positioning based estimate. Generally, the narrower the distribution of the azimuths/elevations of the satellites (whose transmitted satellite positioning signals are detected) around the device, the less accurate the satellite positioning estimate. Accordingly, the indicator may be determined taking into account the azimuthal and/or elevational distribution of the said satellites around the device.

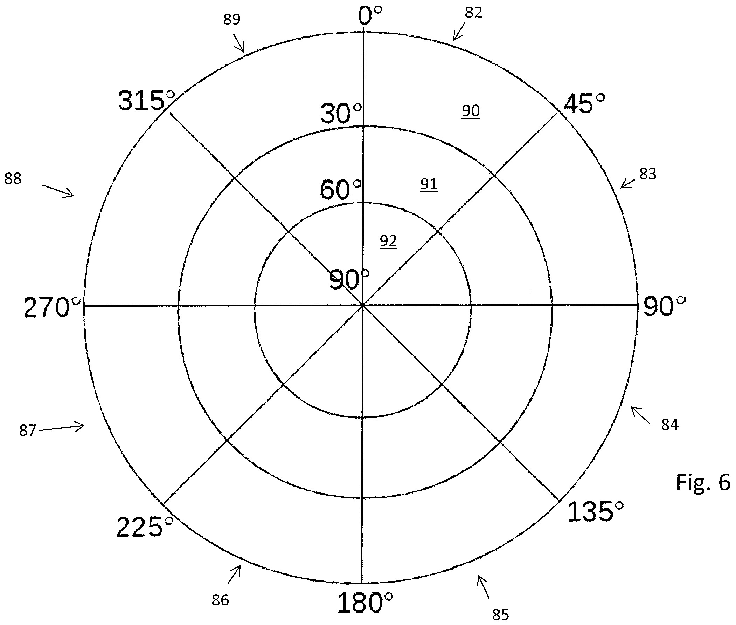

As illustrated in Figure 6, taking into account the azimuthal distribution may comprise determining azimuths of the one or more satellites from which satellite positioning signals were detected to determine the satellite positioning based estimate of the position of the device. To determine the azimuths, it is necessary to define a reference plane. Typically, the reference plane is defined by the orientation of the device. However, it will be understood that the reference plane may be defined in any other way relative to the device, and that the reference plane may be dependent or independent of the orientation of the device. In addition, it is typically necessary to define a reference position on the plane. This may be the estimated position provided by any of the positioning modules or a previously determined position of the device 1. Next, the azimuths of each of the satellites from which satellite positioning signals were received to determine the satellite positioning based estimate of the position of the device are determined. This is typically done by the software 14 in the satellite positioning module 6, and transmitted to the controller 50. The satellite positioning module 6 typically uses ephemeris and/or almanac data (received from the satellites or retrieved from a database as explained above) to determine the azimuths. Next a plurality of (eight at 45° intervals in the example of Figure 6) azimuth sectors 82-88 is defined around the device 1 (which is at the centre of the diagram in Figure 6), each azimuth sector comprising a (different) portion of a 360° azimuth range surrounding the device 1. The number of azimuth sectors in which at least one satellite is detected (i.e. by receiving one or more satellite positioning signals therefrom) may then be counted, the indicator being the number of azimuth sectors in which at least one satellite is detected or being derived therefrom.

As also illustrated in Figure 6, taking into account the elevational distribution may comprise determining the elevations of the one or more satellites from which satellite positioning signals were detected to determine the satellite positioning based estimate of the position of the device. As above, a reference plane is defined. In addition, it is typically necessary to define a reference position on the plane. As above, this may be the estimated position provided by any of the positioning modules or a previously determined position of the device 1. Next, the elevation of each of the satellites from which satellite positioning signals were received to determine the satellite positioning based estimate of the position of the device is determined. This is typically done by the software 14 in the satellite positioning module 6, and transmitted to the controller 50. The satellite positioning module 6 typically uses ephemeris and/or almanac data (received from the satellites or retrieved from a database as explained above) to determine the azimuths. Next a plurality of (three at 30° intervals in the example of Figure 6) elevation sectors 90-92 is defined relative to the device 1. The number of elevation sectors 90-92 in which at least one satellite is detected (i.e. by receiving one or more satellite positioning signals therefrom) may then be counted, the indicator being the number of elevation sectors in which at least one satellite is detected or being derived therefrom.

The indicator may be derived from the combination of the number of elevation sectors in which at least one satellite is detected and the number of azimuth sectors in which at least one satellite is detected. Alternatively, a plurality of regions may be defined, each region being defined by a combination of a particular azimuth sector and a particular elevation sector. Determining the accuracy indicator taking into account the orbital positioning data may comprise determining the number of sectors in which satellites from which satellite positioning signals are received to determine the satellite positioning based estimate of the position of the device are located.

Another way in which the accuracy of the satellite positioning based estimate can be estimated is to determine whether the device 1 is near or adjacent to one or more satellite positioning signal blocking features 81 (e.g. tall buildings or cliff faces) as illustrated in Figure 5. Accordingly an indicator of the likely accuracy of the satellite positioning based estimate can be provided by determining whether (or to what extent) one or more (or all three) of the estimated positions of the device 1 provided by the positioning modules 6-10 meet one or more proximity criteria with respect to one or more satellite positioning signal blocking features. The positions of one or more satellite positioning signal blocking features 81 may be provided in the database of geographical descriptive data 56 provided on the server 2. Alternatively, positions in which it is known (e.g. by the recorded experience of the device 1 or a similar device) that signals from one or more azimuth and/or elevation sectors will be blocked from reaching the device may be provided in the database 56, typically together with data indicative of the azimuth and/or elevation sectors from which signals are likely to be blocked. The proximity criteria may include: whether the estimated position(s) of the device 1 is(are) within a predetermined distance of a satellite positioning signal blocking feature; or whether estimated position(s) of the device 1 is(are) within a predetermined distance where the satellite positioning signals from one or more satellites of the satellite positioning system are likely to be blocked. The proximity criteria may also include whether the device is approaching a satellite positioning signal blocking feature or a position where the satellite positioning signals from one or more satellites of the satellite positioning system are likely to be blocked. In this case, successive estimated positions of the device may be stored and compared to determine a direction of movement. The indicator of the accuracy of the satellite positioning based estimate of the position of the device in this case may be a binary indicator indicative of whether the one or more proximity criteria are met by the position of the device. Alternatively the indicator may be a value indicating to what extent the proximity criteria are met by the position of the device.

The database of location specific geographical descriptive data may be added to in response to a determination by the controller 50 that signals transmitted by one or more satellites located in one or more azimuth/elevation sectors are blocked. In this case, an estimated position of the device (e.g. an estimated position provided by any of the positioning modules or a previously detected position of the device) where the satellite positioning signals from the said satellites located in said sectors or regions were blocked is stored in the database 56. Data indicative of the sectors in which the said satellites were located may also be stored. Alternatively, the controller 50 may be configured to determine the position(s) of the satellite blocking feature(s) from the position of the device and the sectors in which the blocked satellites are located. The determined positions may then be stored in the database 56. It will be understood that the controller 50 would typically be aware of the existence and approximate location of satellites whose signals were being blocked by satellite positioning signal blocking features because the controller 50 typically has access to almanac and/or ephemeris data from which the orbital positions of a plurality of (or all of) the satellites of the satellite constellation of the satellite positioning system can be determined.

Yet another way in which the accuracy of the satellite positioning based estimate can be estimated is by estimating the altitude of the device 1. This is illustrated in Figure 6. If the altitude of the device 1 is greater than a threshold altitude value, then it may be assumed that the device 1 is in an upper floor of a high-rise building 100 and, accordingly, indoors. The altitude of the device 1 can therefore provide an indication that the satellite positioning based estimate of the position of the device 1 is likely to be inaccurate.

Altitude data indicative of the altitude of the device 1 may be measured by the altitude sensor 9 such as a barometer when the device comprises a suitable such sensor. Alternatively, altitude data may be retrieved by the device 1 from one of the positioning modules or from a memory (e.g. memory 11 of the device or the database of the server computer 2). For example, the altitude data may be provided to the device 1 by the controller 50 of the server 2 (which may, for example, infer the altitude of the device 1 by its proximity to one or more electromagnetic signal sources of known position and altitude). The altitude data (and the altitude threshold to which it is compared) may be absolute altitude data. Alternatively the altitude data may be relative to the altitude of the ground level (or an average (e.g. mean) altitude of the ground level) at an approximate position of the device. In this case, relative altitude data may be provided directly to the device 1 (e.g. by the controller 50). Alternatively, an altitude sensor 9 of the device may measure absolute altitude data indicative of the absolute altitude of the device and transmitted to the controller 50. The (average) absolute altitude of the ground level at an approximate position of the device may be provided to or by the controller 50 (e.g. from memory 11 of the device or, more typically, from the database 56 of the server). The controller 50 may be configured to calculate the relative altitude of the device by subtracting the ground level from the absolute altitude of the device. The calculated relative altitude may then be compared to a relative altitude threshold value to estimate whether the device is in a high-rise building (and is therefore indoors). It will be understood that the approximate position of the device may be the estimated positions from any of the positioning modules 6-10.

The indicator of the accuracy of the satellite positioning based estimate of the position of the device determined from the altitude of the device may be a binary indicator, e.g. the indicator may be set to a first value if the altitude is greater than the threshold value, or the indicator may be set to a second value if the altitude is less than the threshold value. Alternatively, the indicator may be indicative of an absolute or relative altitude of the device 1.

Yet another way in which the accuracy of the satellite positioning based estimate of the position of the device can be estimated is to compare a plurality (e.g. two or more, but preferably three or more) successive satellite positioning based estimates of the position of the device and determine the proximity of (each) one to the other(s). If the position estimates are too close to each other, then this may be an indication that the position estimates are inaccurate. The proximity of (each) one of the position estimates to the other(s) may be estimated by determining the distribution (e.g. standard deviation) of the position estimates and comparing the distribution to a threshold value. The threshold value may be an absolute value (1 metre, 0.5metres or 0.2metres) or a relative value (e.g. half, a quarter or an eighth of the expected error of the position estimate of the device when the device is moving at 1.5m/s in open space at the equator). A low distribution (or close proximity between the position estimates) can be indicative of an error in the position estimates because successive satellite positioning based estimates measured in open space from strong satellite positioning signals received from satellites positioned over a wide azimuth range typically vary from each other significantly due to errors inherent in such positioning systems. Accordingly, the satellite positioning module may be configured to receive first satellite positioning signals, determine a first satellite positioning based estimate of the position of the device, transmit the first satellite positioning based estimate to the controller 50, receive second satellite positioning signals, determine a second satellite positioning based estimate of the position of the device, and transmit the second satellite positioning based estimate to the controller 50. The satellite positioning module may be further configured to receive third satellite positioning signals, to determine a third satellite positioning based estimate from the third satellite positioning signals and transmit the third satellite positioning based estimate to the controller 50. The controller 50 then compares the first and second (and typically third) satellite positioning based estimates to determine their distribution (e.g. standard deviation), or their proximity to each other. The controller 50 may then determine an indicator of the accuracy of the satellite positioning based estimates responsive to their distribution (proximity to each other). The indicator may be a binary value indicating whether the first and second satellite positioning based estimates are too close together to be considered accurate, or a value indicative of how close the first and second satellite positioning based estimates are.

Another way in which the accuracy of the satellite positioning based estimate of the position of the device 1 can be estimated is to compare the number of satellites "visible" to the device 1 (i.e. the number of satellites from which satellite positioning signals are detected by the device) to a number of satellites identified in the orbital positioning data available to the controller 50. The satellite positioning data may be almanac data identifying all of the satellites of the satellite positioning system constellation. Alternatively, the satellite positioning data may be ephemeris data relating to a plurality of satellites of the satellite positioning system constellation (e.g. a plurality of satellites (e.g. currently) being tracked by the device). Alternatively, the satellite positioning data may be almanac and/or ephemeris data relating to the satellites positioned in a 360° azimuth range surrounding the device and a 90° elevation range defined with respect to the device. Comparing the number of satellites "visible" to the device 1 to a number of satellites the device 1 ought to be able to detect (i.e. in the absence of satellite positioning signal blocking features) allows an indicator of the accuracy of the satellite positioning based estimate of the position of the device to be determined because the more satellites visible to the device, the greater the likely accuracy of the satellite positioning based estimate. The indicator may be a binary indicator indicative of whether the ratio of visible satellites to the total number of satellites identified by the orbital positioning data is greater or less than a threshold. Alternatively, the indicator may be a value indicative of the ratio of visible satellites to the total number of satellites identified by the orbital positioning data.

Any one or more of the above indicators may be determined, and the controller may estimate the position of the device taking the satellite positioning based estimate to an extent determined taking into account the said one or more indicators. For example, if the indicator(s) indicate that the satellite positioning based estimate is not likely to be as accurate as the estimate(s) provided by one or both of the other positioning modules 8, 10, the satellite positioning based estimate may not be taken into account at all by the controller 50 to estimate the position of the device. If the indicator(s) indicate that the satellite positioning based estimate is likely to be more accurate than positioning estimates provided by the other positioning modules 8, 10, the satellite positioning based estimate may be provided as the estimated position of the device (i.e. the satellite positioning based estimate may be selected as the estimated position of the device, and the other estimates discarded). Alternatively, the estimates provided by all three positioning modules may be combined to estimate the position of the device, the satellite positioning based estimate being weighted to an extent determined taking into account the indicator(s).

Where more than one of the above indicators is determined, any two or more (or even all of the) indicators may be combined to provide a combined indicator of the likely accuracy of the satellite positioning based estimate. Each indicator may be given the same weight in the determination of the combined indicator. Alternatively (and more typically) one or more (and even each) indicator(s) may be provided with a different weight in the determination of the combined indicator.

The position of the device may be estimated taking into account the combined (or weighted combined) indicator.

Further modifications and variations may be made within the scope of the invention herein disclosed.

**Claims**

1. A method of estimating a position of a device (1), the method comprising: obtaining a first estimated position of the device (1); determining whether the first estimated position of the device meets one or more proximity criteria with respect to one or more satellite positioning signal blocking features by comparing the first estimated position of the device to a location specific geographical descriptive data indicative of the positions of the one or more satellite positioning system blocking features; and **characterised by** deriving an accuracy indicator taking into account the determination of whether the first estimated position meets the said one or more proximity criteria.

2. The method according to claim 1 further comprising: obtaining a satellite positioning based estimate of the position of the device (1), the satellite positioning based estimate being determined from satellite positioning signals received from one or more satellites (79) of a satellite positioning system; and estimating a second position of the device (1) using the satellite positioning based estimate of the position of the device (1) to an extent determined taking into account the accuracy indicator.

3. The method according to claim 1 or claim 2 further comprising: obtaining further satellite positioning data relating to the orbital positions of one or more satellites (79) of the satellite positioning system different from the said one or more satellites from which satellite positioning signals were received to determine the satellite positioning based estimate of the position of the device (1); and storing the further satellite positioning data with reference to an estimated position of the device (1) and/or time.

4. The method according to any one of claims 1 to 3 further comprising: storing an estimated position of the device (1) at which the said satellite positioning signals were received and/or data identifying the said one or more satellites from which satellite positioning signals were received to determine the satellite positioning based estimate and/or data identifying one or more satellites of the satellite positioning system from which no satellite positioning signals were received to determine the satellite positioning based estimate and/or time data relating to the time of day and/or date at which the satellite positioning signals were received to determine the satellite positioning based estimate.

5. The method according to any one of claims 1 to claim 4 further comprising: defining a plurality of regions, each region comprising a portion of a 360° azimuthal range surrounding the device (1) and/or a portion of a 90° elevation range defined relative to the device (1); determining one or more regions from which no satellite positioning signals were received to determine the satellite positioning based estimate of the position of the device (1); obtaining further satellite positioning data relating to the orbital positions of one or more satellites of the satellite positioning system different from the said one or more satellites from which satellite positioning signals were received to determine the satellite positioning based estimate of the position of the device (1); comparing the said one or more regions with the further satellite positioning data to determine whether one or more satellites of the satellite positioning system were located in the said one or more regions when the said satellite positioning signals were received; and, responsive to a determination that one or more satellites were located in one or more of the said regions, storing the further satellite positioning data and/or an estimated position of the device (1) at which the said satellite positioning signals were received and/or data identifying the said region(s) in which the said satellites from which no satellite positioning signals were received were located and/or data identifying the said one or more satellites from which satellite positioning signals were received to determine the satellite positioning based estimate and/or data identifying one or more satellites of the satellite positioning system from which no satellite positioning signals were received to determine the satellite positioning based estimate and/or time data relating to the time of day and/or date at which the satellite positioning signals were received to determine the satellite positioning based estimate.

6. The method according to claim 5 further comprising: determining an estimated position of one or more satellite blocking features and/or an estimated position of at least part of the perimeter of one or more satellite positioning signal blocking features; and storing the estimated position(s) of the satellite blocking feature(s) and/or the estimated position of at least part of the perimeter of one or more satellite positioning signal blocking features.

7. A data processing apparatus for estimating the position of a device (1), the data processing apparatus comprising: two or more positioning system modules (6, 8, 10) for estimating the position of the device c(1); a database of location specific geographical descriptive data indicative of the positions of one or more satellite positioning signal blocking features; and a controller (50) configured to compare a first estimated position of the device (1) provided by one of the positioning modules (6, 8, 10) to location specific geographical descriptive data from the database to determine whether the first estimated position meets one or more proximity criteria with respect to the said one or more satellite positioning signal blocking features, and to derive an accuracy indicator taking into account the determination of whether the first estimated position meets the said one or more proximity criteria.

8. The data processing apparatus according to claim 7 wherein the two or more positioning system modules (6, 8, 10) comprise a satellite positioning system module (6) configured to receive satellite positioning signals from one or more satellites (79) of a satellite positioning system and to determine a satellite positioning based estimate of the position of the device (1) from the received satellite positioning signals, and wherein the controller (50) is further configured to determine a second estimated position of the device (1) using the satellite positioning based estimate of the position of the device (1) to an extent determined taking into account the accuracy indicator.

9. The data processing apparatus according to claim 7 or 8, wherein the satellite positioning system module (6) is further configured to obtain further satellite positioning data relating to the orbital positions of one or more satellites (79) of the satellite positioning system different from the said one or more satellites from which satellite positioning signals were received to determine the satellite positioning based estimate of the position of the device (1); and the controller (50) is further configured to store the further satellite positioning data with reference to an estimated position of the device (1) and/or time.

10. The processing apparatus according to any one of claims 7 to 9, wherein the controller (50) is further configured to store an estimated position of the device (1) at which the said satellite positioning signals were received and/or data identifying the said one or more satellites from which satellite positioning signals were received to determine the satellite positioning based estimate and/or data identifying one or more satellites of the satellite positioning system from which no satellite positioning signals were received to determine the satellite positioning based estimate and/or time data relating to the time of day and/or date at which the satellite positioning signals were received to determine the satellite positioning based estimate.

11. The processing apparatus according to any one of claims 7 to 10, wherein the controller (50) is further configured to define a plurality of regions, each region comprising a portion of a 360° azimuthal range surrounding the device (1) and/or a portion of a 90° elevation range defined relative to the device (1); and to determine one or more regions from which no satellite positioning signals were received to determine the satellite positioning based estimate of the position of the device (1); and to obtain further satellite positioning data relating to the orbital positions of one or more satellites of the satellite positioning system different from the said one or more satellites from which satellite positioning signals were received to determine the satellite positioning based estimate of the position of the device (1); and to compare the said one or more regions with the further satellite positioning data to determine whether one or more satellites of the satellite positioning system were located in the said one or more regions when the said satellite positioning signals were received; and, responsive to a determination that one or more satellites were located in one or more of the said regions, to store the further satellite positioning data and/or an estimated position of the device (1) at which the said satellite positioning signals were received and/or data identifying the said region(s) in which the said satellites from which no satellite positioning signals were received were located and/or data identifying the said one or more satellites from which satellite positioning signals were received to determine the satellite positioning based estimate and/or data identifying one or more satellites of the satellite positioning system from which no satellite positioning signals were received to determine the satellite positioning based estimate and/or time data relating to the time of day and/or date at which the satellite positioning signals were received to determine the satellite positioning based estimate.

12. The processing apparatus according to claim 11, wherein the controller (50) is further configured to determine an estimated position of one or more satellite blocking features and/or an estimated position of at least part of the perimeter of one or more satellite positioning signal blocking features; and to store the estimated position(s) of the satellite blocking feature(s) and/or the estimated position of at least part of the perimeter of one or more satellite positioning signal blocking features.

Fig. 1

Fig. 2

Fig. 3B

60 — Confirm initial position

62 — Wait for a period of time

64 — Copy the buffered sensor data for processing and clear the sensor data buffer.

66 — Estimate an average stride length

68 — Preliminary step detection

70 — Step validation

72 — Confirm the orientation of each step

74 — Generate walk-path vectors

76 — Finalize the position estimate and report it to the user

Fig. 3A

50 — Sample sensor measurements and insert them into the sensor data buffer continuously.

EP 4 220 233 A1

Fig. 4

EP 4 220 233 A1

Fig. 5

Fig. 6

EP 4 220 233 A1

Fig. 7

Europäisches
Patentamt

European
Patent Office

Office européen
des brevets

## EUROPEAN SEARCH REPORT

**Application Number**

EP 23 16 0648

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2009/129346 A2 (QUALCOMM INC [US]; BIACS ZOLTAN F [US]; SHEYNBLAT LEONID [US]; GUM ARN) 22 October 2009 (2009-10-22) * the whole document * * paragraphs [0033], [0042], [0043], [0047] * | 1-12 | INV. G01S19/39 G01S19/25 G01S19/42 |
| A | US 2011/156950 A1 (BHATTACHARYA TARUN KUMAR [US] ET AL) 30 June 2011 (2011-06-30) * the whole document * | 1-12 | |
| A | US 2009/167603 A1 (MURAGUCHI YOSHIYUKI [JP]) 2 July 2009 (2009-07-02) * the whole document * | 1-12 | |
| A | US 2010/176990 A1 (GREEN JIM [US] ET AL) 15 July 2010 (2010-07-15) * the whole document * | 1-12 | |
| A | US 2003/231132 A1 (PARK CHAN-WOO [KR] ET AL) 18 December 2003 (2003-12-18) * the whole document * | 1-12 | TECHNICAL FIELDS SEARCHED (IPC) G01S |
| A | EP 1 630 569 A1 (SEIKO EPSON CORP [JP]) 1 March 2006 (2006-03-01) * the whole document * | 1-12 | |
| A | US 2010/045516 A1 (NAGAHARA MIKIO [JP]) 25 February 2010 (2010-02-25) * the whole document * | 1-12 | |
| X | JP 2006 337262 A (MITSUBISHI ELECTRIC CORP) 14 December 2006 (2006-12-14) * paragraphs [0009] - [0016], [0032]; figure 1 * | 1-12 | |

-/--

The present search report has been drawn up for all claims

| Place of search | Date of completion of the search | Examiner |
|---|---|---|
| Munich | 16 June 2023 | Ribbe, Jonas |

EPO FORM 1503 03.82 (P04C01)

Europäisches
Patentamt

European
Patent Office

Office européen
des brevets

## EUROPEAN SEARCH REPORT

Application Number

EP 23 16 0648

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DANIEL MAIER ET AL: "Improved GPS sensor model for mobile robots in urban terrain", 2010 IEEE INTERNATIONAL CONFERENCE ON ROBOTICS AND AUTOMATION : ICRA 2010 ; ANCHORAGE, ALASKA, USA, 3 - 8 MAY 2010, IEEE, PISCATAWAY, NJ, USA, 3 May 2010 (2010-05-03), pages 4385-4390, XP031709002, ISBN: 978-1-4244-5038-1 * Section "III. IMPROVED SENSOR MODEL" * | 1-12 | |
| A | PAUL D. GROVES: "Shadow Matching: A New GNSS Positioning Technique for Urban Canyons", JOURNAL OF NAVIGATION., vol. 64, no. 03, 7 June 2011 (2011-06-07), pages 417-430, XP055271812, GB ISSN: 0373-4633, DOI: 10.1017/S0373463311000087 * the whole document * | 1-12 | |
| A | JP 5 013385 B1 (ELECTRONIC NAVIGATION RES INST) 29 August 2012 (2012-08-29) * the whole document * | 1-12 | TECHNICAL FIELDS SEARCHED (IPC) |

The present search report has been drawn up for all claims

| Place of search | Date of completion of the search | Examiner |
|---|---|---|
| Munich | 16 June 2023 | Ribbe, Jonas |

EPO FORM 1503 03.82 (P04C01)

## ANNEX TO THE EUROPEAN SEARCH REPORT
## ON EUROPEAN PATENT APPLICATION NO.

EP 23 16 0648

This annex lists the patent family members relating to the patent documents cited in the above-mentioned European search report.
The members are as contained in the European Patent Office EDP file on
The European Patent Office is in no way liable for these particulars which are merely given for the purpose of information.

16-06-2023

| Patent document cited in search report | | Publication date | Patent family member(s) | | Publication date |
|---|---|---|---|---|---|
| WO 2009129346 | A2 | 22-10-2009 | BR PI0910885 | A2 | 09-08-2016 |
| | | | CA 2718988 | A1 | 22-10-2009 |
| | | | CN 102089672 | A | 08-06-2011 |
| | | | EP 2286262 | A2 | 23-02-2011 |
| | | | EP 2568315 | A1 | 13-03-2013 |
| | | | EP 2568316 | A1 | 13-03-2013 |
| | | | JP 5539317 | B2 | 02-07-2014 |
| | | | JP 5718422 | B2 | 13-05-2015 |
| | | | JP 2011519421 | A | 07-07-2011 |
| | | | JP 2014002167 | A | 09-01-2014 |
| | | | KR 20110002095 | A | 06-01-2011 |
| | | | RU 2010146231 | A | 20-05-2012 |
| | | | TW 201000938 | A | 01-01-2010 |
| | | | WO 2009129346 | A2 | 22-10-2009 |
| US 2011156950 | A1 | 30-06-2011 | JP 5407038 | B2 | 05-02-2014 |
| | | | JP 2011137797 | A | 14-07-2011 |
| | | | US 2011156950 | A1 | 30-06-2011 |
| US 2009167603 | A1 | 02-07-2009 | JP 5034935 | B2 | 26-09-2012 |
| | | | JP 2009156734 | A | 16-07-2009 |
| | | | US 2009167603 | A1 | 02-07-2009 |
| US 2010176990 | A1 | 15-07-2010 | US 2010176990 | A1 | 15-07-2010 |
| | | | US 2011057833 | A1 | 10-03-2011 |
| US 2003231132 | A1 | 18-12-2003 | KR 20030095656 | A | 24-12-2003 |
| | | | US 2003231132 | A1 | 18-12-2003 |
| EP 1630569 | A1 | 01-03-2006 | CN 1740806 | A | 01-03-2006 |
| | | | EP 1630569 | A1 | 01-03-2006 |
| | | | JP 4052294 | B2 | 27-02-2008 |
| | | | JP 2006058200 | A | 02-03-2006 |
| | | | KR 20060053101 | A | 19-05-2006 |
| | | | US 2006038717 | A1 | 23-02-2006 |
| US 2010045516 | A1 | 25-02-2010 | JP 4985310 | B2 | 25-07-2012 |
| | | | JP 2009103548 | A | 14-05-2009 |
| | | | US 2010045516 | A1 | 25-02-2010 |
| JP 2006337262 | A | 14-12-2006 | NONE | | |
| JP 5013385 | B1 | 29-08-2012 | JP 5013385 | B1 | 29-08-2012 |
| | | | JP 2013083480 | A | 09-05-2013 |
| | | | US 2013088389 | A1 | 11-04-2013 |

EPO FORM P0459

For more details about this annex : see Official Journal of the European Patent Office, No. 12/82